# EUROPÄISCHE PATENTSCHRIFT

(11) **EP 2 709 898 B1**
(45) Veröffentlichungstag und Bekanntmachung des Hinweises auf die Patenterteilung: **30.03.2016**
(21) Anmeldenummer: 12724282.4
(22) Anmeldetag: 06.05.2012
(51) Int. Cl.: B62K 25/00, B62M 11/16

(54) **GETRIEBEEINHEIT MIT PLANETENGETRIEBE**
TRANSMISSION UNIT WITH PLANETARY GEARING SYSTEM
UNITÉ DE TRANSMISSION DOTÉE D'UN TRAIN ÉPICYCLOÏDAL

(30) Priorität: 18.05.2011 DE 102011050447
(43) Veröffentlichungstag der Anmeldung: 26.03.2014
(73) Patentinhaber: Bettin, Karsten, 30173 Hannover (DE)
(72) Erfinder: Bettin, Karsten, 30173 Hannover (DE)
(86) Internationale Anmeldenummer: PCT/DE2012/100126
(87) Internationale Veröffentlichungsnummer: WO 2012/155895

(56) Entgegenhaltungen:
- WO-A1-2004/087493
- DE-A1- 3 905 579

## Beschreibung

### Technisches Gebiet

Die Erfindung betrifft eine Getriebeeinheit mit Planetengetriebe gemäß dem Oberbegriff des Anspruchs 1, wahlweise für Fahnäder mit kleinen Laufrädern oder für Anhängefahrräder.

### Stand der Technik

Die größte Verbreitung zum Antrieb eines Fahrrades hat der Kettentrieb gefunden. Das mit der Tretkurbel verbundene Antriebs-Kettenrad liegt dabei axial gesehen überwiegend außerhalb des Fahrradrahmens, während der auf der Hinterradachse gelagerte Abtriebs-Zahnkranz axial gesehen überwiegend innerhalb des Fahrradrahmens zwischen Fahrradrahmen und Hinterrad angeordnet ist.

Mehrgang-Schaltungen für Fahrräder werden vorzugsweise durch Kettentriebe mit verschiedenen Kettenrädern an der Tretkurbel und verschiedenen Zahnkränzen am Hinterrad oder durch einstufige Kettentriebe in Kombination mit Nabengetrieben im Hinterrad oder durch eine Kombination dieser beiden Lösungen realisiert. In Summe werden so Gesamtübersetzungen von bis zu 1 : 4,9 (Beispielsweise SRAM i-motion mit der Kettenradkombination 48/18) erreicht. Zur Erreichung nutzungsgerechter Entfaltungen (Wegstrecke pro Kurbelumdrehung) mit einem angemessenen Verhältnis zwischen zurückgelegter Fahrstrecke und Trittfrequenz werden diese Schaltungskombinationen für Laufradgrößen von 28 bis 16 Zoll eingesetzt.

Fahrräder mit kleineren Laufrädern werden vorzugsweise eingesetzt, um kleine Packmaße und Gewichte zu erreichen, häufig ausgeführt als Falträder. Fahrräder mit Laufrädern von 14 Zoll und weniger erfordern eine Übersetzung zwischen Trittfrequenz und Laufradfrequenz von mindestens 1 : 5, um eine nutzungsgerechte Entfaltung zu erreichen.

Darüber hinaus sind Anhängefahrräder für Fahrräder bekannt, die hinten an ein Fahrrad gehängt werden und die im Gegensatz zu den Fahrrädern, an denen sie hängen, zumeist deutlich kleinere Laufräder aufweisen. Bislang werden für diese Laufräder zumeist Getriebe mit ähnlichen Übersetzungen eingesetzt wie für die Fahrräder selbst. Damit muss die Person, die auf dem Anhängefahrrad fährt, mit deutlich höheren Trittfrequenzen fahren als die Person auf dem Fahrrad, an dem das Anhängefahrrad hängt. Auch Anhängefahrräder mit kleinen Laufrädern erfordern die oben genannten Übersetzungen zwischen Trittfrequenz und Laufradfrequenz.

Zur Erreichung vorgenannter Gesamtübersetzungen von etwa 1 : 5 und kleiner für Fahrräder mit Laufradgrößen von 14 Zoll und kleiner sind folgende Lösungen bekannt:
a. Insbesondere für die Laufradgröße von 14 Zoll wird vereinzelt ein Kettentrieb mit einem besonders großen außerhalb des Fahrradrahmens angeordneten Antriebs-Kettenrad (beispielsweise mit 53 Zähnen) und einem besonders kleinen Abtriebs-Zahnkranz (beispielsweise mit 11 Zähnen) verwendet, wobei der Abtriebs-Zahnkranz axial gesehen zwischen dem Fahrradrahmen und dem Hinterrad angeordnet ist.
b. Bei dem Fahrrad dreamslide der Firma dreamslide S.A, Bures-sur-Yvette, Frankreich, wird ebenfalls ein besonders großes Antriebs-Kettenrad und ein besonders kleiner Abtriebs-Zahnkranz verwendet, wobei Antriebs-Kettenrad und Abtriebs-Zahnkranz axial gesehen innerhalb des Fahrradrahmens angeordnet sind.
c. Einsatz von zwei hintereinander geschalteten Kettentrieben (zum Beispiel US 3 623 749 A, EP 1 600 368 A2, US 5 186 482 A, US 7 229 089 B2, US 6 595 539 B1, US 2005/0035570 A1, US 6 799 771 B2).
d. Einsatz eines Planetengetriebes mit feststehendem Hohlrad und Abtriebssonnenrad an der Tretkurbel in Kombination mit einem Kettentrieb (DE 39 05 579 A1 und high speed drive der Firma schlumpf innovations gmbh, Vilters/Schweiz). Aus der DE 3905 579 A1 ist eine Getriebeeinheit mit Planetengetriebe gemäß dem Oberbegriff des Anspruchs 1 bekannt.
e. Einsatz eines Planetengetriebes mit feststehendem Hohlrad und Abtriebssonnenrad am Hinterrad in Kombination mit einem Kettentrieb (z. B. DE 39 05 579 A1, in Teilen auch US 3 944 253 A, Fig. 20 zu WO 2011 / 102 606 A2).

Lösung a. hat den Nachteil, dass aufgrund der unterschiedlichen Anordnung von Antriebs-Kettenrad (außerhalb) und Abtriebs-Zahnkranz (innerhalb) zum Fahrradrahmen der Fahrradrahmen zwischen den Kettenrädern hindurch oder über den Kettentrieb hinweg geführt werden muss. Aufgrund einer Vielzahl von Rahmenbedingungen (zum Beispiel der erforderlichen großen Kettenräder und der kleinen Abtriebs-Zahnkränze, der Rahmengeometrie, der erforderlichen Rahmenfestigkeiten, der erforderlichen Abstände der Kette zum Fahrradrahmen, der erforderlichen Abstände des Hinterrades zum Fahrradrahmen, der Anordnung einer geeigneten Bremse, der Ausbaubedingungen für das Hinterrad und die Kette) muss dabei ein abhängig von der Laufradgröße ermittelbarer Mindestabstand zwischen Tretlagerachse und Hinterradachse eingehalten werden. Dieser Mindestabstand sowie das große Antriebs-Kettenrad führen in einer Ausführung als Faltrad zu einem entsprechend großen Packmaß. Mit einer beispielsweise verwendeten Kettenrad-Kombination 53/11 wird nur eine Gesamtübersetzung von 1 : 4,8 erreicht. Daher besteht der weitere Nachteil, dass die erreichbare Gesamtübersetzung für kleinere Laufradgrößen als 14 Zoll kaum eine angemessene Entfaltung ermöglicht. Eine Ausführung als mehrgängige Kettenschaltung ist wegen des entstehenden Kettenschräglaufes nur mit einer entsprechend langen Kette möglich, wodurch wiederum ein ermittelbarer Mindestabstand zwischen Tretlagerachse und Hinterradachse erforderlich wird. Lösung b. hat folgende Nachteile:
Fahrradrahmen, Tretlager und Kettenrad sind als Sonderbauteile mit entsprechendem Kostenaufwand herzustellen, zu montieren und instand zu halten. Die spezielle Ausführung des Kettenrades verhindert die Verwendung von Mehrfach-Kettenrädern. Ebenso ist aufgrund des speziellen Antriebs-Kettenrades, der Anordnung der Bremse und der Erfordernisse für den Fahrradrahmen ein wiederum abhängig von der Laufradgröße ermittelbarer Mindestabstand zwischen Tretlagerachse und Hinterradachse erforderlich, der in einer Ausführung als Faltrad wiederum ein entsprechend großes Packmaß zur Folge hätte.

Lösung c. hat folgende Nachteile:
Der Doppelkettentrieb erfordert wegen der beiden in Reihe zu realisierenden Kettentriebe einen relativ großen horizontalen Abstand zwischen Tretlagerachse und Hinterradachse. Hierdurch wird die Faltlänge eines Faltrades relativ groß und der Geradeauslauf ist aufgrund des weniger auf dem Hinterrad liegenden Fahrergewichtes instabiler. Als Ein-Gang-Getriebe erfordern diese Lösungen mindestens zwei Getriebestufen (2 Kettentriebe). Als Mehrganggetriebe würden diese Lösungen dann mindestens drei Getriebestufen (2 Kettentriebe und eine Mehrgangnabenschaltung im Hinterrad) erfordern. Die resultierende hohe Umdrehungszahl des zweiten Kettentriebes erfordert einen hohen Energieaufwand.

Lösung d. hat folgende Nachteile:
Die Drehmomenteinleitung erfolgt von der Tretkurbel auf die Tretlagerwelle. Die Welle-Nabe-Verbindung zwischen der Tretlagerwelle und dem Planetenträger eines nachgeschalteten Planetengetriebes muss wegen der noch nicht nicht übersetzten hohen Kurbelkräfte und des verhältnismäßig geringen Durchmessers der Tretlagerwelle entsprechend groß dimensioniert oder wie in DE 39 05 579 A1 stoffschlüssig vorgesehen werden. Die im Planetengetriebe an der Tretkurbel einzusetzenden Zahnräder müssen ebenfalls verhältnismäßig groß und damit auch schwer ausgeführt werden. Die resultierende hohe Umdrehungszahl des Kettentriebes erfordert einen hohen Energieaufwand.

Die zu Lösung e. in DE 39 05 579 A1 offenbarte Variante hat folgende Nachteile:
Der Planetenträger des Planetengetriebes und der Abtriebs-Zahnkranz des Kettentriebes liegen axial gesehen auf verschiedenen Seiten des Fahrradrahmens. Daraus resultiert der Nachteil, dass das Drehmoment des Abtriebs-Zahnkranzes zunächst auf die Hinterradwelle übertragen werden muss, bevor es auf der anderen Seite des Fahrradrahmens vom Planetenträger aufgenommen werden kann. Die Hinterradwelle sowie etwaige Welle-Nabe-Verbindungen zwischen Abtriebs-Zahnkranz und Hinterradwelle beziehungsweise zwischen Hinterradwelle und Planetenträger müssen ein hohes Drehmoment aufnehmen können. Planetenträger und Hinterradwelle müssen dann entweder, wie in DE 39 05 579 A1 gezeigt, aus einem Stück gefertigt werden, wodurch ein sehr hoher Materialabtrag und Kostenaufwand für die Hinterradwelle entstehen würde. Oder zwischen Hinterradwelle und Planetenträger muss eine entsprechend groß dimensionierte Welle-Nabe-Verbindung vorgesehen werden. Insgesamt wird durch die bekannte Variante ein erheblicher axialer Einbauraum zwischen Kettenlinie und Bezugsmittelebene des Fahrrades erforderlich. Ein weiterer Nachteil besteht darin, dass das durch das Gewicht des Fahrers auf die Hinterradwelle wirkende Biegemoment in der offenbarten Lösung auch auf den Planetenträger wirkt und den Zahneingriff des Planetengetriebes beeinträchtigt. Außerdem kann mit der Anordnung des Planetengetriebes auf der Innenseite des Fahrradrahmens nur eine Gangstufe des Planetengetriebes realisiert werden, da aufgrund der Anordnung des Abtriebssonnenrades als auf der Hinterradwelle gelagertes Sonnenrad die Drehmomentübertragung vom Sonnenrad aus gesehen nur in axialer Richtung zum Hinterrad erfolgen kann.

Die zu Lösung e. in US 3 944 253 A beziehungsweise in DE 25 20 129 A1 und in Fig. 20 zu WO 2011 / 102 606 A2 offenbarten Varianten haben folgende Nachteile:
Aufgrund der unterschiedlichen Anordnung von Antriebs-Kettenrad (außerhalb) und Abtriebs-Zahnkranz (innerhalb) zum Fahrradrahmen muss der Fahrradrahmen zwischen den Kettenrädern hindurch geführt werden mit den bereits unter a. beschriebenen Nachteilen. Außerdem kann mit der Anordnung des Planetengetriebes auf der Innenseite des Fahrradrahmens nur eine Gangstufe des Planetengetriebes realisiert werden, da aufgrund der Anordnung des Abtriebssonnenrades als auf der Hinterradachse gelagertes Sonnenrad die Drehmomentübertragung vom Sonnenrad aus gesehen nur in axialer Richtung zum Hinterrad erfolgen kann.

### Darstellung der Erfindung

Aufgabe der Erfindung ist es, wahlweise für Fahrräder oder für Anhängefahrräder eine der oben genannten Lösung e. ebenfalls entsprechende Getriebe-Lösung ohne die oben genannten Nachteile der in DE 39 05 579 A1 beziehungsweise in DE 25 20 129 A1 beziehungsweise in Fig. 20 zu WO 2011 / 102 606 A2 offenbarten Varianten zu entwickeln, wobei die Getriebeeinheit wahlweise zum Betrieb verschiedener Arten von der Getriebeeinheit vorgeschalteten Zugmittelgetrieben (Kettentrieb und Riementrieb) oder Stirnradgetrieben geeignet sein soll.

Zur Lösung dieser Aufgabe bei einer gattungsgemäßen Getriebeeinheit dienen die kennzeichnenden Merkmale des Anspruchs 1.

Weitere vorteilhafte Ausgestaltungen der Erfindung ergeben sich aus den Unteransprüchen. Wesentliche Vorteile der Erfindung bestehen neben der Vermeidung der oben genannten Nachteile aus DE 39 05 579 A1 beziehungsweise DE 25 20 129 A1 beziehungsweise Fig. 20 zu WO 2011 / 102 606 A2 darüber hinaus darin,
a. dass das Sonnenrad nicht gesondert gelagert werden muss und damit radial gesehen innerhalb des Sonnenrades Schaltmittel vorgesehen werden können, die die Ausführung von zwei nebeneinander angeordneten Sonnenrädern und damit von zwei schaltbare Gangstufen der Getriebeeinheit ermöglichen.
b. dass mit der Getriebeeinheit in Kombination mit einem vorgeschalteten Kettentrieb mit verschiedenen Kettenrädern an der Tretkurbel und/oder verschiedenen Abtriebs-Zahnkränzen für das Fahrrad eine bis zu sechs Gangstufen umfassende Mehrgangschaltung mit gleichmäßiger Gangabstufung verwirklicht werden kann.
c. dass für die Getriebeeinheit sowohl Varianten zur einarmigen Aufhängung im Fahrradrahmen als auch Varianten zur zu beiden Seiten des Hinterrades vorgesehenen Aufhängung im Fahrradrahmen ausgeführt werden können.
d. dass die Getriebeeinheit insbesondere für Fahrräder mit kleinen Laufradgrößen von 6 bis 16 Zoll eingesetzt werden kann und dabei sehr geringe Achsabstände zwischen Tretlagerachse und Hinterradwelle verwirklicht werden können, um beispielsweise für Falträder kleine Faltmaße zu erreichen.
e. dass die Getriebeeinheit eine Freilaufkupplung beinhaltet, die zwischen dem Sonnenrad beziehungsweise den Sonnenrädern und der Hinterradwelle angeordnet ist, und damit weder innerhalb des Laufrades noch zwischen dem Abtriebsrad eines der Getriebeeinheit vorgeschalteten Zugmittel- oder Stirnradgetriebes und dem Antreiber der Getriebeeinheit eine Freilaufkupplung vorgesehen werden muss, wodurch unterschiedliche Formen von Laufrädern verwendet und fest mit der Getriebeeinheit verbunden werden können und wodurch dieselbe Getriebeeinheit bei gleicher erreichbarer Entfaltung auf unterschiedliche Laufradgrößen angepasst werden kann, indem einfach das mit dem Antreiber zumindest in einer Drehrichtung drehfest verbundene Abtriebsrad des Zugmittel- oder Stirnradgetriebes gewechselt wird.
f. dass sämtliche Getriebeteile des Fahrrades, nämlich das Planetengetriebe, das Antriebs- und das Abtriebsrad des Zugmittel- oder Stirnradgetriebes, die Schalteinrichtungen und die Freilaufkupplung auf der gleichen Seite des Fahrradrahmens montierbar und demontierbar sind.
g. dass durch die mit den Merkmalen der Unteransprüche besonders platzsparend ausgeführten Getriebekomponenten ergonomisch günstige Kettenlinienabstände erreicht werden, die weniger als 40 mm betragen können.

### Kurze Beschreibung der Zeichnungen

Fig. 1 zeigt eine bevorzugte Ausführungsform der Zwei-Gang-Getriebeeinheit mit einer schaltbaren Stirnzahn-Klauen-Freilaufkupplung und einer einarmigen Aufhängung der Getriebeeinheit im Fahrradrahmen, womit in Kombination mit einem vorgeschalteten Endlos-Kettentrieb mit Dreifach-Kettenrad ein Sechs-Gang-Getriebe mit gleichmäßiger Gangabstufung verwirklicht werden kann.
Fig. 2 zeigt den Schaltungsteil der Zwei-Gang-Getriebeeinheit mit Stirnzahn-Klauen-Freilaufkupplung aus Fig. 1, wobei hier die zweite Gangstufe geschaltet ist.
Fig. 3 und Fig. 4 zeigen Explosionsansichten der Stirnzahn-Klauenkupplung aus Fig. 1 in zwei bevorzugten Ausführungsformen.
Fig. 5 zeigt die Schnittansicht I-I durch die erste Gangstufe des Planetengetriebes aus Fig. 1.
Fig. 6 zeigt die Schnittansicht II-II durch die zweite Gangstufe des Planetengetriebes aus Fig. 1.
Fig. 7 zeigt die Montierbarkeit der Freilaufkupplung ohne Ausbauerfordernis wesentlicher Teile der Getriebeeinheit
Fig. 8 zeigt eine bevorzugte zweite Ausführungsform der Getriebeeinheit als Ein-Gang-Getriebeeinheit mit Stirnzahn-Klauen-Freilaufkupplung und einarmiger Aufhängung der Getriebeeinheit im Fahrradrahmen, womit in Kombination mit einem vorgeschalteten Endlos-Kettentrieb mit Zweifach-Kettenrad und 3 Abtriebs-Zahnkränzen ein Sechs-Gang-Getriebe mit gleichmäßiger Gangabstufung verwirklicht werden kann.
Fig. 9 zeigt die teilgeschnittene Ansicht III-III der Freilaufkupplung aus Fig. 8.
Fig. 10 zeigt die Montierbarkeit der Freilaufkupplung der Getriebeeinheit aus Fig. 8 ohne Ausbauerfordernis wesentlicher Teile der Getriebeeinheit.
Fig. 11 zeigt eine bevorzugte dritte Ausführungsform der Getriebeeinheit als besonders kompakte und einfach herzustellende Ein-Gang-Getriebeeinheit mit einteiliger Hinterradwelle, mit variierter Hinterradbefestigung und mit variierter Befestigung der Getriebeeinheit im Fahrradrahmen.
Fig. 12 zeigt die Klauenkupplung zwischen dem Antreiber der Getriebeeinheit und dem Planetenträger des Planetengetriebes in der Explosionsansicht.

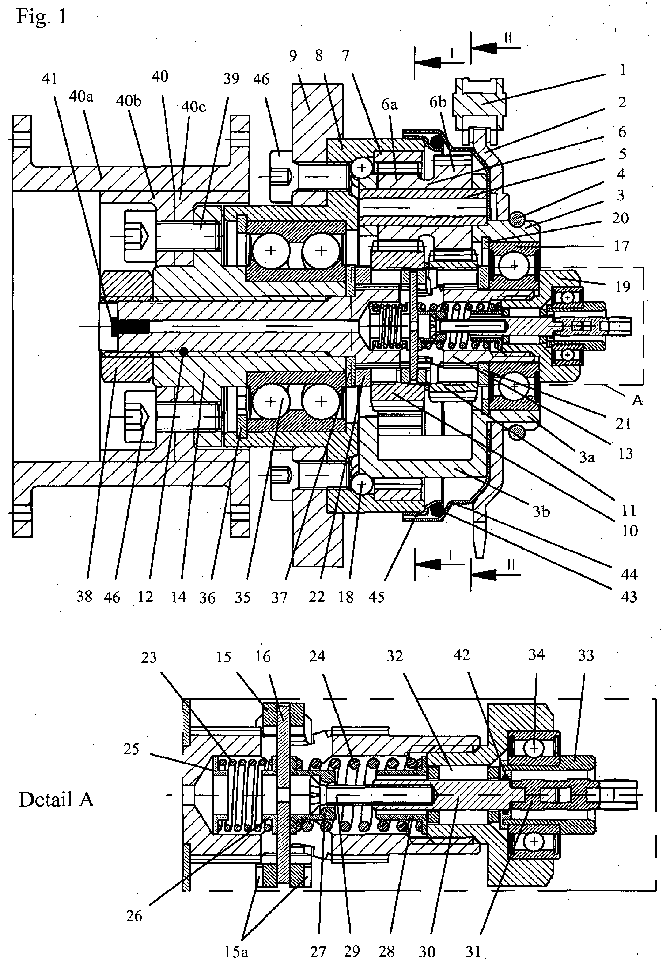

Fig 1. zeigt die Zwei-Gang-Getriebeeinheit mit Stirnzahn-Klauen-Freilaufkupplung und einarmiger Hinterradaufhängung in der Schnittansicht.

### Bester Weg zur Ausführung der Erfindung und bevorzugte Ausführungsformen

Das von einer Kette 1 oder einem nicht gesondert dargestellten Keil- oder Zahnriemen oder einem nicht gesondert dargestellten Stirnrad angetriebene Abtriebsrad 2 eines der Getriebeeinheit vorgeschalteten Endlos-Ketten- oder -Riementriebes oder eines der Getriebeeinheit vorgeschalteten Stirnradgetriebes ist mit einem Antreiber 3 der Getriebeeinheit über eine Welle-Nabe-Verbindung drehfest wirkverbunden, wobei das Abtriebsrad 2 beispielsweise durch einen Sicherungsring 4 auf dem Antreiber 3 gesichert ist. Der vom Abtriebsrad 2 angetriebene Antreiber 3 besteht aus einem Antreiberteil 3a und ist nach einem besonderen Merkmal der Erfindung axial gesehen zum Fahrradrahmen hin als Planetenträger 3b eines Planetengetriebes ausgeformt.

Nach einem besonderen Merkmal der Erfindung liegen Antriebsrad 2 und Planetenträger 3b axial gesehen außerhalb des Fahrradrahmens. Dies ermöglicht den Ein- und Ausbau der Kette 1 oder auch den Wechsel des Abtriebsrades 2 zur Verwirklichung verschiedener Übersetzungen der Getriebeeinheit, ohne dass gleichzeitig das Hinterrad ausgebaut werden muss. Ebenso ermöglicht dies den Einsatz von Keil- oder Zahnriemen oder den Einsatz von Stirnradgetrieben, ohne dass zum Ein- und Ausbau des Riemens der Fahrradrahmen aufgetrennt getrennt werden muss. Jegliche Ausführungsformen mit der Getriebeeinheit vorgeschalteten Kettentrieben, Keil- oder Zahnriementrieben oder Stirnradgetrieben sind neben der gezeigten Ausführungsform von der Erfindung umfasst. In diesem Fall wäre lediglich das Abtriebsrad 2 sowie gegebenenfalls die Welle-Nabe-Verbindung zwischen dem Abtriebsrad 2 und dem Antreiberteil 3a des Antreibers 3 zu modifizieren.

Wird nach einem besonderen Merkmal der Erfindung wie gezeigt ein gekröpftes Antriebsrad 2 verwendet, verringert sich der axiale Abstand zwischen der Kettenlinie und dem Hinterrad, wodurch eine axial gesehen sehr platzsparende Anordnung des Planetengetriebes erreicht wird. Die Anordnung ermöglicht darüber hinaus auch, dass insbesondere für die Großserienfertigung alternativ Abtriebsrad, Antreiber und Planetenträger aus einem Stück, zum Beispiel als Gussteil, gefertigt werden. Auch diese Ausführungsform ist von der Erfindung umfasst.

Der Planetenträger 3b führt mindestens eine, vorzugsweise drei Planetenachsen 5, auf denen jeweils ein Planetenrad 6 mit zwei Stufen 6a und 6b gelagert ist, wobei die Stufe 6a einen kleineren und die Stufe 6b einen größeren Durchmesser aufweist. Nur die Stufe 6a kämmt mit dem Hohlrad 7 des Planetengetriebes. Das Hohlrad 7 ist über einen Hohlradträger 8 fest mit dem Fahrradrahmen 9 verbunden. Die Stufe 6a der Planetenräder 6 kämmt mit dem Sonnenrad 10, die Stufe 6b der Planetenträder kämmt mit dem Sonnenrad 11. Die Sonnenräder 10 und 11 sind koaxial zu einer Hinterradwelle 12 angeordnet, die in dieser Ausführungsform nach einem besonderen Merkmal der Erfindung zweiteilig ausgeführt ist, bestehend aus einem ersten Wellenteil, nachfolgend als Antriebswelle 13 bezeichnet, und einem mit dem ersten Wellenteil koaxial verbundenen zweiten Wellenteil, nachfolgend als Hinterradflansch 14 bezeichnet.

Das Eingangsdrehmoment für die Getriebeeinheit wird von dem Abtriebsrad 2 auf den Antreiberteil 3a des Antreibers 3 zum Planetenträger 3b übertragen. Vom Planetenträger 3b wird das Drehmoment über die Planetenräder 6a und 6b zu den Sonnenrädern 10 beziehungsweise 11 gewandelt und übertragen.

Von den Sonnenrädern 10 und 11 wird das Drehmoment mit einem axial verschieblichen und mit der Antriebswelle 13 drehfest wirkverbundenen Kupplungsglied 15 auf die Antriebswelle 13 übertragen. Zu diesem Zweck sind nach einem besonderen Merkmal der Erfindung an beiden Stirnseiten des Kupplungsgliedes 15 gleichmäßig am Umfang verteilt Stirnzähne 15a angeordnet, die in entsprechende Ausnehmungen der Sonnenräder 10 beziehungsweise 11 greifen können.

Die Stirnzähne 15a des Kupplungsgliedes 15 werden von einer die Hinterradwelle 12 rechtwinklig zu deren Achse durchdringenden, in einer entsprechenden Ausnehmung der Hinterradwelle 12 angeordneten und in entsprechenden Ausnehmungen des Kupplungsgliedes 15 geführten Druckplatte 16 axial in die Ausnehmungen des jeweiligen Sonnenrades 10 beziehungsweise 11 gedrückt, in Fig. 1 in die des Sonnenrades 10.

Der zum Planetenträger 3b ausgeformte Antreiber 3 ist nach einem besonderen Merkmal der Erfindung über das Lager 17 auf der Antriebswelle 13 und über das Lager 18 in dem Hohlradträger 8 gelagert. Das Lager 17 wird von einer Befestigungsschraube 19 gegen einen Sicherungsring 20 gedrückt, der in dem Antreiber 3 angebracht ist. Der Planetenträger 3b drückt dann das Kugellager 18 gegen den Hohlradträger 8, so dass eine sichere Lagerung des Antreibers 3 erfolgt. Die Distanzscheiben 21 und 22 gewährleisten, dass die Sonnenräder 10 und 11 axial gesehen sicher geführt werden.

Die Funktionsweise der Zwei-Gang-Schaltung der Getriebeeinheit wird im Folgenden unter Bezugnahme auf Detail A zu Fig. 1 erläutert:
Zur Verwirklichung der ersten Gangstufe üben nach einem besonderen Merkmal der Erfindung eine schwächere Druckfeder 23 und eine stärkere Druckfeder 24, die in Führungsbuchsen 25, 26, 27 und 28 gefasst sind, eine axiale Kraft auf die Druckplatte 16 aus. Üben beide Druckfedern 23 und 24 ihre Kraft auf die Druckplatte 16 aus, so werden nach einem besonderen Merkmal der Erfindung die Stirnzähne 15a des Kupplungsgliedes 15 von der Druckplatte 16 aufgrund der größeren Kraft der Druckfeder 24 in die Ausnehmungen des Sonnenrades 10 gedrückt. Die Differenz der Federkräfte der Druckfedern 23 und 24 entspricht dabei in etwa der Federkraft der Druckfeder 23. Die Übertragung des Drehmomentes erfolgt in diesem Fall von dem Planetenträger 3b über die Stufe 6a der Planetenräder 6, die sich am Hohlrad 7 abstützen, zum Sonnenrad 10 und vom Sonnenrad 10 über das Kupplungsglied 15 auf die Antriebswelle 13, während das Sonnenrad 11 auf der Antriebswelle 13 frei dreht. Auf diese Weise wird die erste Gangstufe der Getriebeeinheit verwirklicht.

Die zweite Gangstufe wird nach einem weiteren besonderen Merkmal der Erfindung nach dem im Folgenden beschriebenen Aufbau und Mechanismus geschaltet:
Innerhalb der Führungsbuchse 27 wird eine Schaltschraube 29 - vorzugsweise mit Linksgewinde - geführt, die wiederum mit einer Schaltmutter 30 verschraubt ist.

Die Schaltmutter 30 ist Teil eines. Schaltkettchens 31 mit Kettengliedern, das mit einem geeigneten hier nicht gezeigten Bowdenzug verbunden ist. Die Schaltmutter 30 wird in einem Nadellager 32 geführt, das wiederum in der Befestigungsschraube 19 gelagert ist. Die Kettenglieder des Schaltkettchens 31 stützen sich in einer Führungsbuchse 33 ab, die mit Hilfe eines Lagers 34 in der Befestigungsschraube 19 gelagert ist.

Zur Montage der Schaltmutter 30 mit der Schaltschraube 29 weisen Antriebswelle 13 und Druckplatte 16 koaxial zur Antriebswelle 13 je eine Bohrung auf, in die ein Schraubendreher zum Festhalten der Schaltschraube 29 eingeführt werden kann.

Da sich die Schaltschraube 29, die Schaltmutter 30, das Schaltkettchen 31 und die Führungsbuchse 33 nicht mit der Antriebswelle 13 mitdrehen können, sind diese durch das Nadellager 32 und das Lager 34 in der Antriebswelle 13 gelagert.

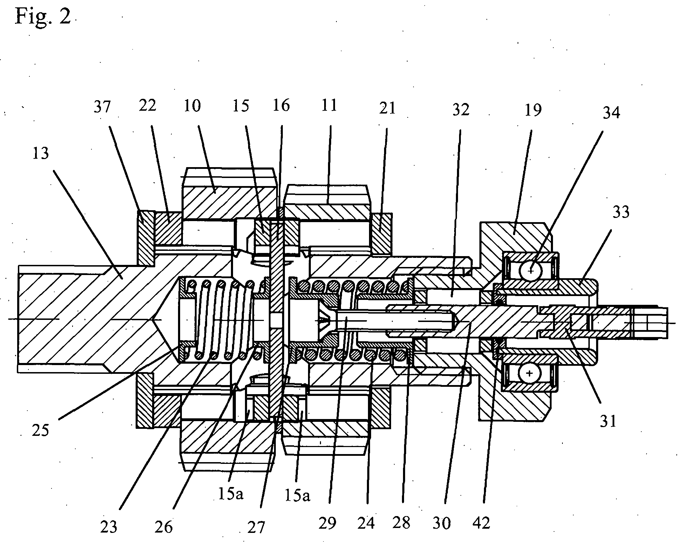

Wird das Schaltkettchen 31 von dem Bowdenzug aus der Antriebswelle 13 heraus gezogen, nimmt die Schaltschraube 29 die Führungsbuchse 27 mit. Die Führungsbuchse 27 drückt die Druckfeder 24 zusammen. Das Schaltkettchen 31 wird soweit aus der Antriebswelle 13 herausgezogen, bis Führungsbuchse 27 und Druckfeder 24 den Kontakt zur Druckplatte 16 sicher verloren haben. Da die Druckfeder 24 nun keine Kraft mehr auf die Druckplatte 16 ausübt, drückt die schwächere Druckfeder 23 die Druckplatte 16 und damit die Stirnzähne 15a des Kupplungsgliedes 15 in die Ausnehmungen des Sonnenrades 11. Das Drehmoment wird nun von dem Planetenträger 3b über die Stufe 6a der Planetenräder 6, die sich am Hohlrad 7 abstützen, zur Stufe 6b der Planetenräder 6 und zum Sonnenrad 11 und vom Sonnenrad 11 über das Kupplungsglied 15 auf die Antriebswelle 13 übertragen, während das Sonnenrad 10 auf der Antriebswelle 13 frei dreht. Auf diese Weise wird die zweite Gangstufe der Getriebeeinheit verwirklicht. Die Schaltstellung in der zweiten Gangstufe zeigt Fig. 2.

Nach einem weiteren besonderen Merkmal der Erfindung wird der Federweg der Druckfeder 24 zur Vermeidung von Belastungsspitzen durch die Führungsbuchsen 27 und 28 begrenzt. Die Druckfeder 24 kann nur soweit zusammengedrückt werden, bis sich die Führungsbuchsen 27 und 28 berühren. Dies gewährleistet gleichzeitig auch, dass das Schaltkettchen 31 nur soweit nach rechts gezogen werden kann, dass keine Hebelkräfte auf die Schaltmutter 30 wirken können.

Alternativ kann, hier nicht gezeigt, die Schaltmutter 30 als Gewindehülse ausgeführt werden, wobei dann die Schaltschraube 29 mit der Gewindehülse verschraubt wird und mit dem Schaltkettchen 31 eine zweite Schraube verbunden ist, die von der anderen Seite in die Gewindehülse geschraubt wird. Auch diese Ausführungsform ist von der Erfindung umfasst.

In der in Fig. 1 gezeigten Ausführungsform der Getriebeeinheit sind die Antriebswelle 13 und der Hinterradflansch 14 durch eine Gewindeverbindung miteinander verbunden, die das Drehmoment von der Antriebswelle 13 auf den Hinterradflansch 14 überträgt.

Der Hinterradflansch 14 ist nach einem besonderen Merkmal der Erfindung radial gesehen innen in einem zweireihigen Lager, vorzugsweise einem zweireihigen Schrägkugellager 35 gelagert, welches radial gesehen außen den Hohlradträger 8 lagert, der zu diesem Zwecke nach einem weiteren besonderen Merkmal der Erfindung zusätzlich eine Lagerschale aufweist. Der Hohlradträger 8 ist mit dem Fahrradrahmen 9 verbunden. Das Schrägkugellager 35 ist im Hohlradträger 8 mittels eines Sicherungsrings 36 axial festgelegt. Axial gesehen zwischen Schrägkugellager 35 und Antriebswelle 13 dient eine Unterlegscheibe 37 als wellenseitige Anlageschulter für das Schrägkugellager 35. Eine Mutter 38 verkontert den Hinterradflansch 14 gegen die Unterlegscheibe 37 mit der Antriebswelle 13. In diesem Ausführungsbeispiel weist der Hinterradflansch 14 am Umfang mindestens drei, vorzugsweise vier oder fünf Muttergewinde auf, an die mit Hilfe von Schrauben 39 ein Hinterrad 40, in diesem Ausführungsbeispiel als Speichenradnabe 40a mit Verbindungselementen 40b und 40c zwischen Radnabe 40a und Hinterradflansch 14 ausgeführt, angeschraubt werden kann.

Die Getriebeeinheit wird über die abgedichteten Lager 17, 34, 35, den Stopfen 41 sowie über die Dichtungsringe 42 und 43 gegen die Umgebung abgedichtet. Der Dichtungsring 43 wird zwischen einer Dichtkappe 44, die zwischen Antriebsrad 2 und Planetenträger 3b verklemmt ist, und einer Anlegekappe 45, die eine ansteigende Schräge aufweist und fest mit dem Hohlradträger 8 verbunden ist, geführt. Zum Zwecke der Montage wird der Dichtungsring 43 auf die Anlegekappe 45 geschoben. Dann wird die Dichtkappe 44 gegen den Dichtungsring 43 gedrückt, so dass dieser nach einem weiteren besonderen Merkmal der Erfindung in Richtung der ansteigenden Schräge der Anlegekappe 45 gedrückt wird und somit für niedrigviskose Schmiermittel eine reibungsarme und platzsparende, dynamische Dichtung des drehbar gelagerten Planetenträgers 3b gegen den fest mit dem Fahrradrahmen 9 verbundenen Hohlradträger 8 entsteht.

Die Getriebeeinheit ist mit Befestigungsschrauben 46 mit dem Fahrradrahmen 9 verbunden. Die Befestigungsschrauben 46 übertragen das Reaktionsdrehmoment des Hohlrades 7, das fest mit dem Hohlradträger 8 verbunden ist, auf den Fahrradrahmen 9.

Um Antriebswelle 13 und Hinterradflansch 14 radial zu zentrieren, weist die Antriebswelle 13 eine Zentrierfläche auf. Ebenso weist der Hinterradflansch 14 eine Zentrierfläche für das Hinterrad 40 auf.

Fig. 2 stellt den Schaltungsteil der Zwei-Gang-Getriebeeinheit mit Stirnzahn-Klauen-Freilaufkupplung dar, wobei in diesem Fall die Stirnzähne 15a des Kupplungsgliedes 15 in die Ausnehmungen des Sonnenrades 11 greifen und die zweite Gangstufe der Getriebeeinheit schalten.

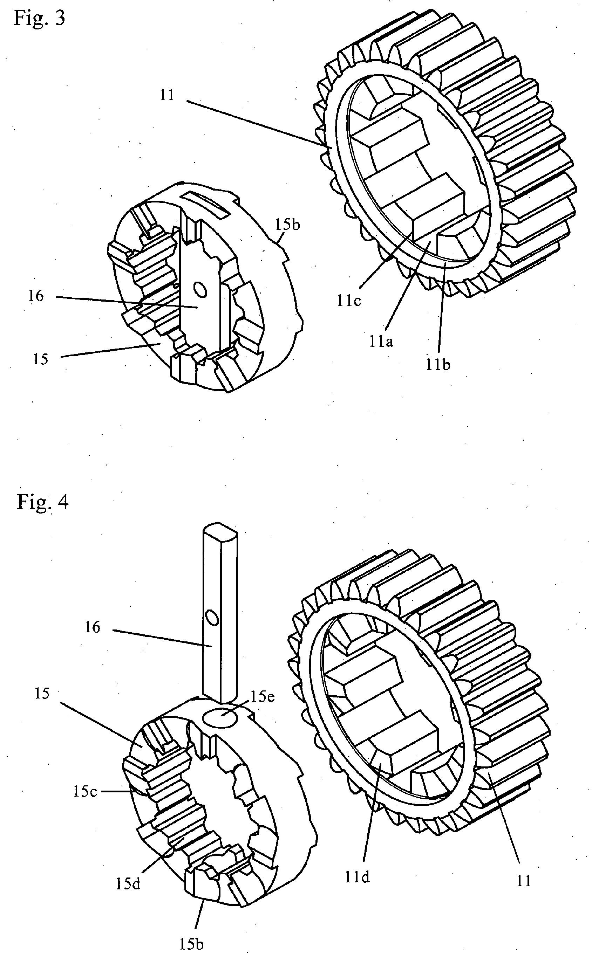

Am Beispiel der zweiten Gangstufe wird unter ergänzender Bezugnahme auf Fig. 3 und Fig. 4 im Folgenden die Funktionsweise der Freilaufkupplung erläutert, wobei die Beschreibung sinngemäß auch für die erste Gangstufe gilt:
Fig. 3 und Fig. 4 zeigen Explosionsansichten des Sonnenrades 11, des Kupplungsgliedes 15 und der Druckplatte 16 in zwei bevorzugten Ausführungsformen. Nach einem besonderen Merkmal der Erfindung weist das Kupplungsglied 15 an beiden Stirnseiten am Umfang verteilte Stirnzähne 15a auf. Die Stirnzähne 15a wiederum weisen an der der Drehrichtung zugewandten Seite jeweils eine Abschrägung 15b auf. Das Sonnenrad 11 weist nach einem weiteren besonderen Merkmal der Erfindung axial durchgehende Ausnehmungen 11a auf, in die die Stirnzähne 15a des Kupplungsgliedes 15 eingreifen, um das Drehmoment von dem angetriebenen Sonnenrad 11 auf das Kupplungsglied 15 zu übertragen. Wird das Sonnenrad 11 nicht mehr angetrieben, dreht das drehfest mit der Hinterradwelle wirkverbundene Kupplungsglied 15 weiter. Dadurch wird das Kupplungsglied 15 über die Abschrägung 15b aus der formschlüssigen Verbindung mit dem Sonnenrad 11 gedrückt. Diese Kupplungsverbindung zwischen dem Sonnenrad 11 und dem Kupplungsglied 15 wird im Folgenden als Stirnzahn-Klauenkupplung bezeichnet.

Die axial durchgehenden Ausnehmungen 11a der Sonnenräder 10 und 11 haben zwei Vorteile: Die Kupplung kann nach einem besonderen Merkmal der Erfindung axial gesehen innerhalb der Sonnenräder 10 und 11 und radial gesehen zwischen Hinterradwelle und Verzahnung der Sonnenräder 10 und 11 platziert werden, wodurch zum einen kein zusätzlicher über die Breite der Sonnenräder 10 und 11 hinaus gehender axialer Einbauraum erforderlich wird, zum anderen muss an dem Sonnenrad 10 beziehungsweise 11 keine stirnseitig zu arbeitende Stirnverzahnung vorgesehen werden. Vielmehr können die Sonnenräder 10 und 11 über eine größere Länge gefertigt und dann auf Länge abgeschnitten werden. Der Platzbedarf für das Kupplungsglied 15 wird innerhalb des Sonnenrades 11 durch eine einfache Bohrung 11b geschaffen.

In Verbindung mit der Druckfeder 23, die die Druckplatte 16 und das Kupplungsglied 15 gegen das Sonnenrad 11 verschiebt, wird eine Freilauf-Kupplung verwirklicht, indem das Kupplungsglied 15 im Freilauffall durch die Abschrägung 15b aus dem im Freilauffall ruhenden Sonnenrad 11 gedrückt wird und die Druckfeder 23 zusammendrückt, während die Druckfeder 23 die Druckplatte 16 und das Kupplungsglied 15 gegen das Sonnenrad 11 drückt und die Stirnzahn-Klauen-Kupplung dann wieder greift, wenn das wieder angetriebene Sonnenrad 11 die Antriebswelle 13 wieder überholt. Um ein sicheres Auskuppeln im Freilauf-Fall zu gewährleisten, dringen die Abschrägungen 15b der Stirnzähne 15a an der in Fig. 4 mit 15c bezeichneten Stelle etwas tiefer in die Stirnseiten des Kupplungsgliedes 15 ein.

Radial gesehen innerhalb des Kupplungsgliedes 15 ist eine Evolventenverzahnung 15d vorgesehen, die das Drehmoment von dem Kupplungsglied 15 auf die Antriebswelle 13 überträgt.

Nach einem besonderen Merkmal der Erfindung wird für die Übertragung des Drehmomentes von dem Kupplungsglied 15 auf die Antriebswelle 13 eine Evolventenverzahnung 15d des Moduls 0,8 mit 16 Zähnen nach DIN 5480 verwendet, wodurch die Zähnezahl durch vier teilbar ist und der Fußkreisdurchmesser etwas größer als 12 mm und der Kopfkreisdurchmesser etwas kleiner als 14 mm ist. Demgegenüber sind nach einem weiteren besonderen Merkmal der Erfindung acht Zähne, und damit wiederum eine durch vier teilbare Zähnezahl, für die Stirnverzahnung des Kupplungsgliedes 15 vorgesehen. Die mit den durch vier teilbaren Zähnezahlen erreichte Symmetrie erlaubt eine einfache Herstellung des Kupplungsgliedes 15 und der Sonnenräder 10 und 11.

Schließlich können sowohl das Kupplungsglied 15 als auch die Sonnenräder 10 und 11 allein durch spanabhebende Verfahren hergestellt werden. Insbesondere für eine kostengünstige Kleinserienfertigung sind keine gegossenen Teile erforderlich.

Fig. 3 zeigt die auch in Fig. 1 dargestellte Ausführungsform des Kupplungsgliedes 15 mit Druckplatte 16.

In Fig. 4 ist nach einem weiteren besonderen Merkmal der Erfindung ein nochmals einfacher herzustellendes Kupplungsglied 15 dargestellt, wobei als Druckstück hier keine Platte, sondern ein runder, an beiden Seiten abgeflachter Druckstab 16 verwendet wird und die Ausnehmungen des Kupplungsgliedes 15 zur Führung des Druckstabes 16 nach einem weiteren besonderen Merkmal der Erfindung durch eine einfache Bohrung 15e hergestellt werden können.

Um der Gefahr einer Abnutzung der Kanten 11c des Sonnenrades 11 im Freilauf-Betrieb vorzubeugen, weist das Sonnenrad 11 in Fig. 4 nach einem weiteren besonderen Merkmal der Erfindung fräsbare Abschrägungen 11d auf, die den gleichen Schrägungswinkel wie die Abschrägungen 15b des Kupplungsgliedes aufweisen. Das Kupplungsglied 15 wird im Freilauf-Fall über diese Abschrägungen 11d aus dem Sonnenrad 11 gedrückt.

Nach einem weiteren besonderen Merkmal der Erfindung ist durch die Anordnung der Freilaufkupplung zwischen Sonnenrad 10, 11 und Antriebswelle 13 ein deutlich geringeres Drehmoment zu übertragen als bei einer Anordnung der Freilaufkupplung vor dem Planetengetriebe.

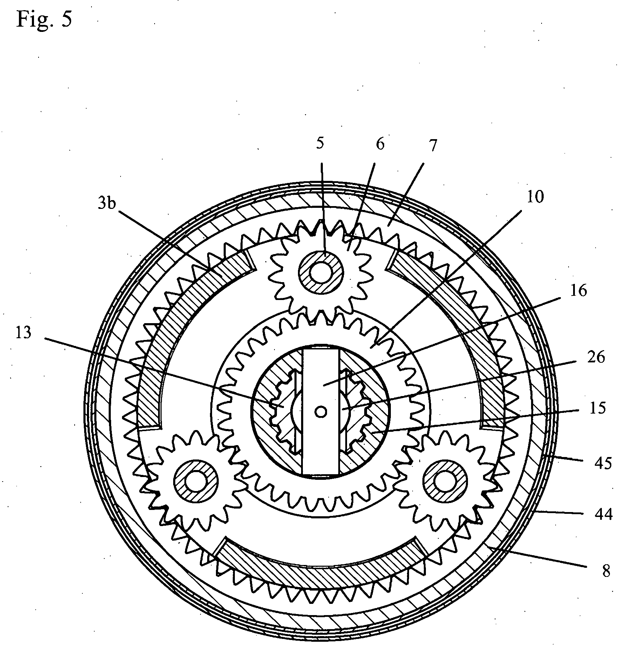

Fig. 5 stellt die Schnittansicht I-I durch die ersten Gangstufe der Getriebeeinheit dar, wobei der Fahrradrahmen 9 sowie das von der Schnittebene I-I aus gesehen hinter dem Fahrradrahmen 9 angeordnete Hinterrad 40 nicht dargestellt sind.

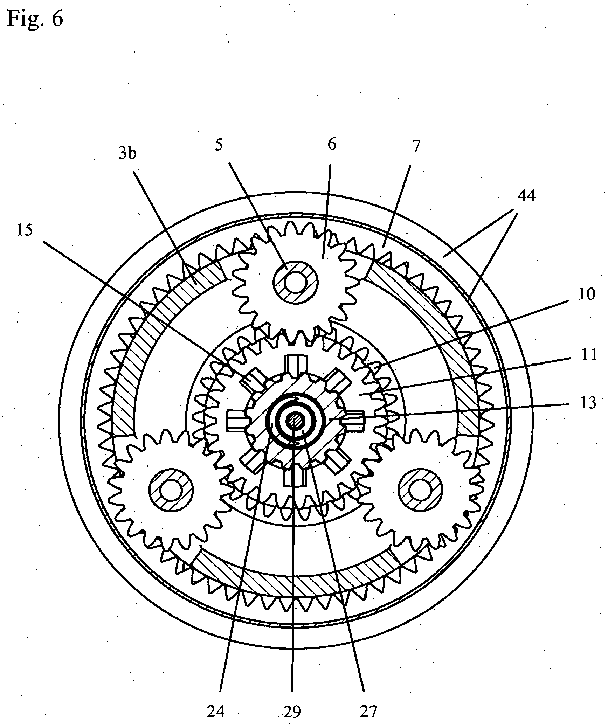

Fig. 6 stellt die Schnittansicht II-II durch die zweite Gangstufe der Getriebeeinheit dar, wobei die Kette 1, der Fahrradrahmen 9 sowie das von der Schnittebene II-II aus gesehen hinter dem Fahrradrahmen 9 angeordnete Hinterrad 40 nicht dargestellt sind und der Hohlradträger 8 durch die Dichtkappe 44 verdeckt wird.

Nach einem besonderen Merkmal der Erfindung können die Außendurchmesser der Antriebswelle 13 und des Hinterradflansches 14 an den außen liegenden, nicht miteinander verbundenen Enden größer sein als axial gesehen auf Höhe des Schrägkugellagers 35.

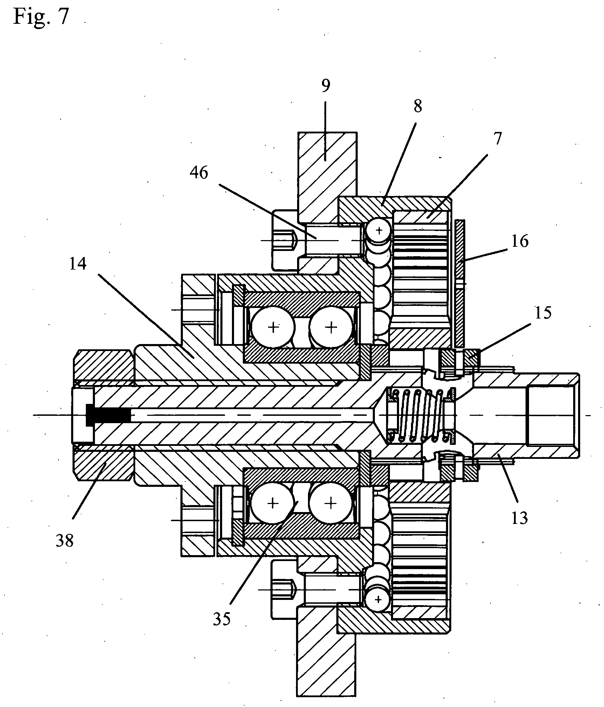

Wie in Fig. 7 gezeigt, können nach einem besonderen Merkmal der Erfindung das Kupplungsglied 15 und die Druckplatte 16 am Hohlrad 7 vorbei ein- und ausgebaut werden, ohne dass Hohlrad 7, Hohlradträger 8, Antriebswelle 13, Hinterradflansch 14 oder Schrägkugellager 35 voneinander gelöst werden müssen. Damit können zwischen dem Schrägkugellager 35 und dem Hinterradflansch 14 sowie optional zwischen dem Schrägkugellager 35 und dem Hohlradträger 8 die erforderlichen festen Passungen vorgesehen werden. Zum Zwecke des Ein- und Ausbaus der Druckplatte 16 wird das Kupplungsglied 15 mit der Druckplatte 16 bis zum antreiberseitigen Anschlag der Druckplatte 16 in den Ausnehmungen der Antriebswelle 13 geführt und anschließend aus dem Kupplungsglied 15 am Hohlrad 7 vorbei hinein- beziehungsweise herausgedrückt.

Außerdem befinden sich nach einem weiteren besonderen Merkmal der Erfindung in diesem Ausführungsbeispiel alle getrieberelevanten Bauteile und Funktionsbereiche, wie das Abtriebsrad, das Planetengetriebe, die Freilaufkupplung und die Schalteinrichtungen auf der gleichen Seite des Fahrradrahmen wie das Abtriebsrad und das Antriebsrad des die Getriebeinheit antreibenden Zugmittel- beziehungsweise Stirnradgetriebes. Kette, Keil- oder Zahnriemen sowie etwaige Stirnräder können ohne Ausbau des Hinterrades montiert und demontiert werden, das Hinterrad kann auf der anderen Seite des Fahrradrahmens 9 ohne weitere Um- oder Ausbauten direkt mit dem Hinterradflansch 14 verbunden werden.

Damit können zur Aufnahme des Hinterrades 40 und zur Übertragung der Gewichtskräfte und Drehmomente vom Hinterradflansch 14 auf das Hinterrad 40 neben der gezeigten Ausführungsform viele für einseitige Laufradbefestigungen bereits bekannte Ausführungsformen für den Hinterradflansch 14 vorgesehen werden. Auch diese Ausführungsformen sind von der Erfindung umfasst.

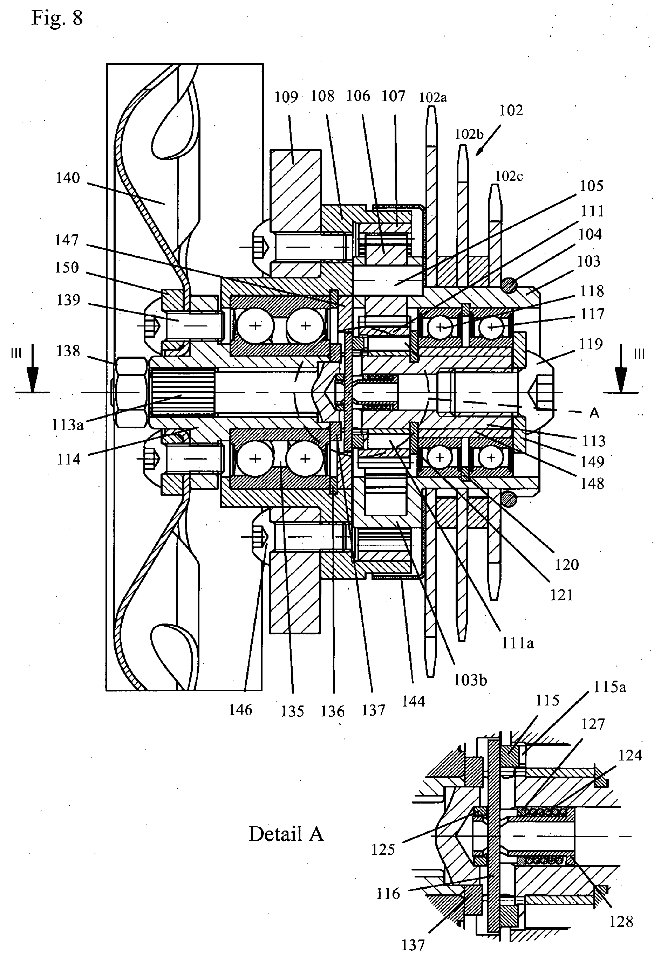

Ebenso können vielerlei Formen von Hinterrädern 40 eingesetzt werden, die entweder direkt mit dem Hinterradflansch 14 verschraubt sind oder die, wie in Fig. 1 gezeigt, über zusätzliche Elemente 40a, 40b des Hinterrades 40 mit dem Hinterradflansch 14 verbunden werden können. Fig. 8 beschreibt die Schnittansicht einer weiteren bevorzugten Ausführungsform der Getriebeeinheit mit einer Gangstufe des Planetengetriebes. Aus Gründen der Übersichtlichkeit wurden die zu Fig. 1 beschriebenen und in Fig. 8 mit entsprechender Funktion vertretenen Teile der Getriebeeinheit in Fig. 8 mit einer im Vergleich zu Fig. 1 um 100 erhöhten Ziffer bezeichnet. Sofern nachfolgend nicht abweichend beschrieben, ist die Beschreibung der Teile in Fig. 1 für die entsprechenden Teile in Fig. 8 zu übertragen.

Im Vergleich zu dem in Fig. 1 gezeigten Ausführungsbeispiel sind in der in Fig. 8 beschriebenen Ausführungsform der Getriebeeinheit folgende Aspekte modifiziert:
a. Das Getriebe ist als Eingang-Getriebe ausgeführt und für die Verwirklichung mehrerer Gangabstufungen für das Antriebssystem des Fahrrades sind auf dem Antreiber 103 mehrere Abtriebs-Zahnkränze 102a, 102b und 102c angeordnet.
b. Zwischen der Dichtkappe 144 und dem Hohlradträger 108 ist eine Spaltdichtung vorgesehen
c. Das Kupplungsglied 115 der Freilaufkupplung weist nur an einer Seite eine Stirnverzahnung 115a auf und weist ansonsten keine Ausnehmungen zur Führung der Druckplatte 116 auf. Die Druckplatte 116 wird durch eine Scheibe 147 in ihrer radialen Position gehalten.
d. Der Andrückmechanismus für das Kupplungsglied 115 der Freilaufkupplung ermöglicht eine Anordnung der Druckfeder 124 auf der zum Antreiber 103 gewandten Seite der Druckplatte 116.
e. Die Lagerung des Antreibers 103 erfolgt durch zwei auf der Antriebswelle 113 in diesem Fall mittels einer Buchse 148 gelagerte Lager 117 und 118.
f. Das Hinterrad 140 ist so ausgeführt, dass es direkt am Hinterradflansch 114 befestigt werden kann.
g. Die Welle-Nabe-Verbindung zwischen Antriebswelle 113 und Hinterradflansch 114 ist als Zahnwellenverbindung 113a ausgeführt.

Zu a. Das Getriebe ist als Eingang-Getriebe ausgeführt, das Kupplungsglied 115 muss nur als Freilaufkupplung und nicht schaltbar ausgeführt werden. Statt eines Abtriebsrades in dem Ausführungsbeispiel aus Fig. 1 wird ein Abtriebs-Zahnkranzpaket 102 mit mehreren Abtriebs-Zahnkränzen 102a, 102b, 102c, ff verwendet. In Kombination mit einem handelsüblichen Zweifach-Kettenrad sowie unter Verwendung eines geeigneten, die Abtriebs-Zahnkränze 102a, 102b, 102c schaltenden hinteren Kettenumwerfers- diese Prinzipien sind für Kettenschaltungen bekannt - lässt sich somit ein Sechs-Gang-Ketten-Getriebe mit einer gleichmäßigen Gangabstufung und einem kurzen Kettenlinienabstand für das Fahrrad verwirklichen.

Zu b. In der in Fig. 8 dargestellten Ausführungsform erfolgt die Abdichtung zwischen Dichtkappe 144 und Hohlradträger 108 durch eine einfache Spaltdichtung, die insbesondere für höherviskose Schmiermittel eine kostengünstige Ausführungsform darstellt.

Zu c. Das Kupplungsglied 115 der Freilaufkupplung weist nach einem besonderen Merkmal der Erfindung folgenden besonders platzsparenden Aufbau auf: Das Kupplungsglied 115 weist nur an einer Stirnseite eine Stirnverzahnung 115a auf und das Kupplungsglied 115 weist keine Ausnehmungen zur Aufnahme und Führung der Druckplatte 116 auf. Die Druckplatte 116 kann rechteckig und ohne weitere Ausnehmungen ausgeführt werden. Nach einem weiteren besonderen Merkmal der Erfindung ist axial gesehen zwischen dem Sicherungsring 136 und dem Planetenträger 103b eine Scheibe 147 angeordnet, die die Druckplatte 116 radial gesehen in Position hält.

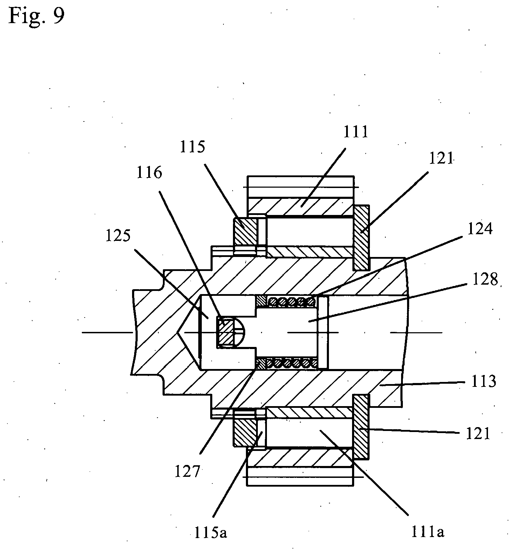

Zu d. Da das Kupplungsglied 115 im Gegensatz zu Fig. 1 axial gesehen näher zum Schrägkugellager 135 liegt, andererseits wie in Fig. 1 ein Hinterradflansch 114 und eine Antriebswelle 113, die miteinander verbunden sind, verwendet werden, steht für die Druckfeder 124 der Freilaufkupplung in Fig. 8 axial gesehen zwischen Druckplatte 116 und Schrägkugellager 135 kein ausreichender Einbauraum zur Verfügung. Nach einem besonderen Merkmal der Erfindung wird die Druckfeder 124 mit nachfolgend beschriebener Anordnung auf der zum Antreiber 103 gewandten Seite der Druckplatte 116 angeordnet. In Fig. 9 sind die nachfolgend beschriebenen Elemente der Freilaufkupplung in der teilgeschnittenen Ansicht III-III aus Fig. 8 dargestellt. Eine Druckhülse 125 mit zwei Schenkeln, die sich in der Antriebswelle 113 abstützt, hält eine Unterlegscheibe 127 auf Distanz zur Druckplatte 116. An der Unterlegscheibe 127 stützt sich die Druckfeder 124 ab, die wiederum eine axiale Kraft auf eine Führungsbuchse 128 ausübt. Die Führungsbuchse 128 weist eine durchgehende Ausnehmung, vorzugsweise eine Bohrung auf, in der die Druckplatte 116 Platz findet. Die Führungsbuchse 128 leitet die Druckkraft der Druckfeder 124 radial gesehen innerhalb der Druckfeder 124 und innerhalb der Druckhülse 125 wieder auf die axial gesehen andere Seite der Druckplatte 116. Über die Bohrung der Führungsbuchse 128 wird die Druckplatte 116 schließlich gegen das Kupplungsglied 115 gedrückt. Wie in der Beschreibung zu Fig.3 und Fig. 4 ausgeführt, wird das Kupplungsglied 115 auch in dieser Ausführungsform im Freilauffall durch die Abschrägungen der Stirnzähne 115a des Kupplungsgliedes 115 aus den Ausnehmungen 111a des Sonnenrades 111 gedrückt. In diesem Fall wird die Druckfeder 124 durch die Führungsbuchse 128 gegen die Unterlegscheibe 127 gedrückt, die sich an der Druckhülse 125 und an der Antriebswelle 113 abstützt. Die Ausführung der Freilaufkupplung mit den oben beschriebenen besonderen Merkmalen ermöglicht eine besonders platzsparende Freilaufkupplung, die hohe Drehmomente übertragen kann und axial gesehen einen minimalen Einbauraum benötigt.

Zu e. Der in Fig. 8 dargestellte Antreiber 103 ist mittels zweier Lager 117 und 118, vorzugsweise mittels zweier Rillenkugellager, auf einer Distanzbuchse 148 drehbar gelagert. Die Distanzbuchse 148 wiederum wird auf die Antriebswelle 113 aufgeschoben. Der Antreiber 103 ist nach einem besonderen Merkmal der Erfindung gegen axiale Verschiebung durch einen Sicherungsring 120, der zwischen den beiden Lagern 117 und 118 in einer Nut des Antreibers 103 angebracht ist, gesichert. Statt eines Sicherungsringes könnte der Antreiber 103 auch eine zwischen den Lagern 117 und 118 angeordnete Absetzung aufweisen. Auch diese Ausführungsform ist von der Erfindung umfasst. Die Schraube 119 fixiert zusammen mit einer Unterlegscheibe 149, die auf der Distanzbuchse 148 angebrachten Lager 117 und 118 axial gegen einen weiteren Sicherungsring 121, der auf der Antriebswelle 113 zwischen dem Sonnenrad 111 und dem Lager 118 angeordnet ist. Der Sicherungsring 121 ist auf der Antriebswelle 113 so positioniert, dass zwischen Planetenträger 103b und Hohlradträger 108 axial gesehen immer ausreichend Abstand besteht und der zum Planetenträger 103b ausgeformte Antreiber 103 frei drehend auf der Antriebswelle 113 axial festgelegt ist.

Zu f. Beispielhaft wird in diesem Ausführungsbeispiel gezeigt, dass das Hinterrad 140 so ausgeführt werden kann, dass es direkt mit dem Hinterradflansch 114 verbunden wird. Damit wird nochmals verdeutlicht: Der Hinterradflansch 114 kann eine Vielzahl verschiedener Hinterradformen aufnehmen, in diesem Ausführungsbeispiel ein Hinterrad 140 aus tiefgezogenem und gestanztem Blech, das mit einer Fixierungsplatte 150 und Befestigungsschrauben 139 am Hinterradflansch 114 befestigt ist und das radial gesehen außen eine handelsübliche hier nicht dargestellte Hinterradfelge aufweist, auf der wiederum ein ebenfalls nicht dargestellter handelsüblicher Fahrradreifen aufgezogen werden kann. Nach einem besonderen Merkmal der Erfindung können dadurch kurze Kettenlinienabstände verwirklicht werden, weil die Bezugsmittelebene des Hinterrades 140 je nach Gestaltung und Ausführung des Hinterrades 140 in Richtung des Fahrradrahmens 109 verschoben werden kann. Zu g. In diesem Ausführungsbeispiel wird als Welle-Nabe-Verbindung zwischen der Antriebswelle 113 und dem Hinterradflansch 114 nach einem besonderen Merkmal der Erfindung eine Zahnwellenverbindung 113a, beispielsweise die in Fig. 8 dargestellte Zahnwellenverbindung 7x8 nach DIN 5481 verwendet. Die Verwendung der Zahnwellenverbindung 113a ermöglicht die Übertragung hoher Drehmomente bei geringem radialen Einbauraum, so dass in dieser bevorzugten Ausführungsform das besonders kleine zweireihige Schrägkugellager 3201BTNG oder auch das zweireihige Rillenkugellager 4201BTNG verwendet werden kann. Antriebswelle 113 und Hinterradflansch 114 sind in diesem Fall über eine auf der Antriebswelle 113 aufgeschraubte Kontermutter 138 gegeneinander verköntert.

Fig. 9 zeigt die teilgeschnittene Ansicht III-III der Freilaufkupplung aus Fig. 8 mit der Druckplatte 116, der innerhalb der Antriebswelle 113 angeordneten Druckfeder 124, der Druckhülse 125 und der Führungsbuchse 128.

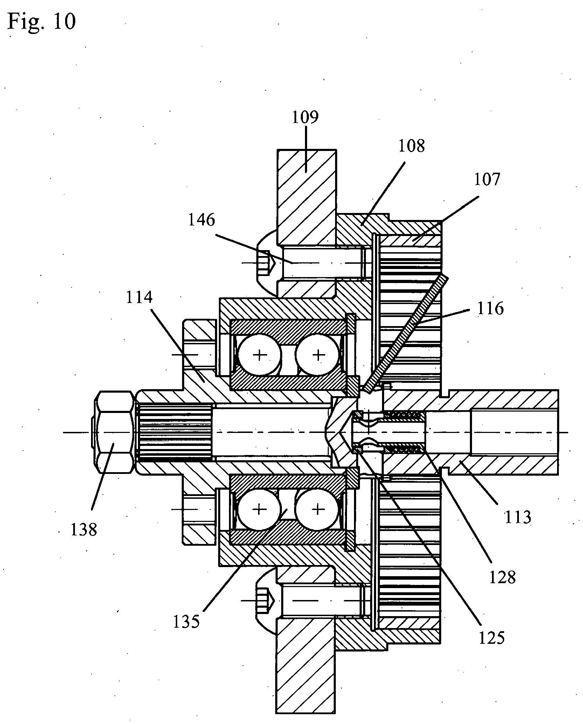

Wie in Fig. 10 gezeigt, ermöglicht die durch die Scheibe 147 mögliche lose Anordnung der Druckplatte 116 in den Ausnehmungen der Antriebswelle 113 und der Führungsbuchse 128 nach einem weiteren besonderen Merkmal der Erfindung auch in diesem Ausführungsbeispiel der Getriebeeinheit als Ein-Gang-Getriebeeinheit den Aus- und Einbau der Druckplatte 116 und des Kupplungsgliedes 115 der Freilaufkupplung, ohne dass gleichzeitig auch das Hinterrad 140, der Hinterradflansch 114, die Antriebswelle 113, das Schrägkugellager 135, das Hohlrad 107 oder der Hohlradträger 108 ausgebaut werden müssen. Damit können zwischen dem Schrägkugellager 135 und dem Hinterradflansch 114 sowie optional zwischen dem Schrägkugellager 135 und dem Hohlradträger 108 die erforderlichen festen Passungen vorgesehen werden.

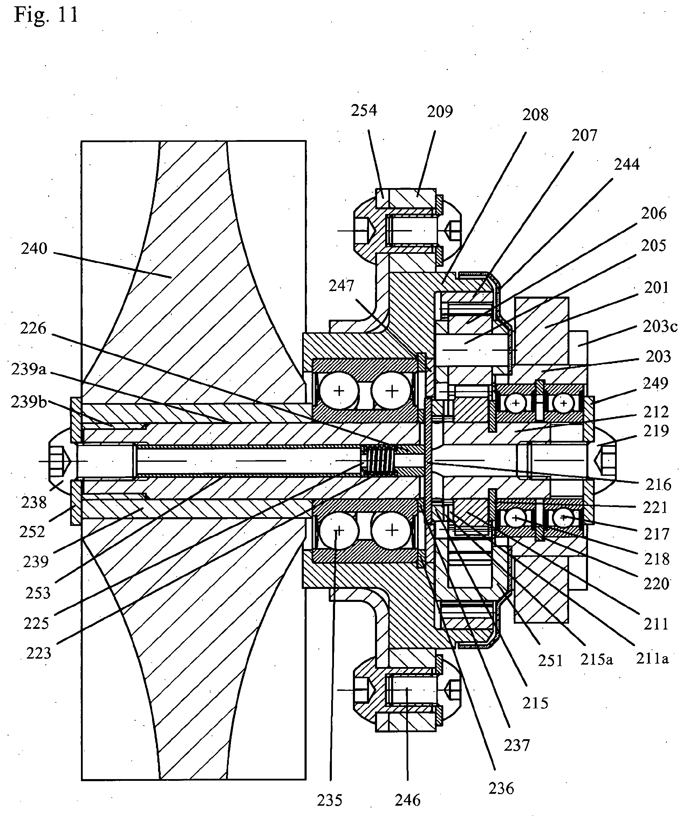

Fig. 11 zeigt eine weitere bevorzugte und besonders kompakt und einfach gestaltete Ein-Gang-Ausführungsform der Getriebeeinheit. Ziel dieser Ausführungsform ist eine im Vergleich zu den Ausführungsformen aus Fig. 1 und Fig. 8 kostengünstigere Herstellung. Aus Gründen der Übersichtlichkeit wurden die zu Fig. 1 beziehungsweise Fig. 8 beschriebenen und in Fig. 11 mit entsprechender Funktion vertretenen Teile der Getriebeeinheit in Fig. 11 mit einer im Vergleich zu Fig. 1 um 200 beziehungsweise mit einer im Vergleich zu Fig. 8 um 100 erhöhten Ziffer bezeichnet. Sofern nachfolgend nicht abweichend beschrieben, ist die Beschreibung der Teile in Fig. 1 beziehungsweise Fig. 8 für die entsprechenden Teile in Fig. 11 zu übertragen.

Im Vergleich zu dem in Fig. 8 gezeigten Ausführungsbeispiel der Getriebeeinheit wurden folgende Aspekte modifiziert:
a. Antriebswelle und Hinterradflansch bestehen aus einem Stück und sind zur Hinterradwelle 212 zusammengefasst.
b. Die Ausführung des Sonnenrades 211 ermöglicht kleinere Zähnezahlen und damit kleinere Gesamtübersetzungen.
c. Die Fixierung des Hinterrades 240 sowie die Übertragung des Drehmomentes von der Hinterradwelle 212 auf das Hinterrad 240 erfolgt durch eine einfache Gewindehülse 239 im Hinterrad 240, die auf die Hinterradwelle 212 aufgeschraubt wird.
d. Alle Bestandteile des Freilaufmechanismus sind axial gesehen lose hintereinander angeordnet.
e. Die Aufhängung der Getriebeeinheit im Fahrradrahmen 209 ist axial gesehen weiter zum Planetengetriebe hin verschoben.
f. Antreiber 203 und Planetenträger 251 sind zweiteilig ausgeführt. Der Antreiber 203 ist zum Abtriebsrad 203c eines der Getriebeeinheit vorgeschalteten Zahnriementriebes ausgebildet.

Zu a. In diesem Ausführungsbeispiel bestehen Antriebswelle und Hinterradflansch aus einem Stück und sind zu einer Hinterradwelle 212 zusammengefasst.

Zu b. Das Sonnenrad 211 ist in dieser Ausführungsform mit einer stirnseitigen Stirnverzahnung 211a oder mit stirnseitigen Klauen, in die die Stirnzähne 215a des Kupplungsgliedes 215 eingreifen können, versehen. Dies hat den Vorteil, dass für das Sonnenrad 211 eine kleinere Zähnezahl gewählt werden kann und damit eine kleinere Gesamtübersetzung für die Getriebeeinheit erreicht werden kann. Im Freilauffall drücken die Klauen oder Stirnzähne 211a des Sonnenrades 211 die Stirnzähne 215a des Kupplungsgliedes 215 aus der Stirnzahn-Verbindung.

Zu c. Axial gesehen zwischen Schrägkugellager 235 und Evolventenverzahnung der Hinterradwelle 212 dient eine Unterlegscheibe 237, die auch als Sicherungsring ausgeführt werden kann, als wellenseitige Anlageschulter für das Schrägkugellager 235. Ein Hinterrad 240, das radial gesehen innen eine Gewindehülse 239 aufweist, ist mit Hilfe eines Hinterrad 240 und Hinterradwelle 212 verbindenden Gewindes auf die Hinterradwelle 212 aufgeschraubt und drückt das Schrägkugellager 235 zum Zweck der axialen Fixierung des Schrägkugellagers 235 auf der Hinterradwelle 212 gegen die Unterlegscheibe 237. Durch geeignete Passungswahl ist ein Passungsabschnitt 239a der Gewindehülse 239 über eine feste Passung fest mit der Hinterradwelle 212 verbunden und trägt die gewichts- und fahrbahnbedingten Lasten. Die Drehmomentübertragung zwischen Hinterradwelle 212 und Hinterrad 240 erfolgt im Wesentlichen über den Gewindeabschnitt 239b der Gewindehülse 239. Die das Hinterrad 240 tragende Gewindehülse wird mit Hilfe einer Schraube 238 und einer Unterlegscheibe 252 verkontert.

Zu d. Die Ausführung von Antriebswelle und Hinterradflansch in einem Stück als Hinterradwelle 212 schafft Raum innerhalb der Hinterradwelle, so dass die Druckkraft der Druckfeder 223 im Gegensatz zu der in Fig 8 dargestellten Ausführungsform axial nicht mehr umgeleitet werden muss und die Druckfeder 223 auf der zum Hinterrad 240 gewandten Seite der Druckplatte 216 platziert werden kann. Die Druckfeder 223 stützt sich über ein Führungsrohr 253 an der Schraube 238 ab. Nach einem weiteren besonderen Merkmal der Erfindung werden in dieser Ausführungsform die Führungsbuchse 225, die Druckfeder 223, die Führungsbuchse 226, die Druckplatte 216 und das Kupplungsglied 215 ohne weitere axial wirkende Führungs- oder Befestigungsmittel axial gesehen einfach lose hintereinander angeordnet gegen das Sonnenrad 211 gedrückt. Über diese Anordnung wird wie bereits in Fig. 10 für die Ein-Gang-Variante der Getriebeeinheit gezeigt, wiederum die Montage der Druckplatte 216 ohne Ausbau der wesentlichen Getriebeteile (Schrägkugellager 235, Hohlradträger 208, Hohlrad 207, Hinterradwelle 212) möglich.

Zu e. In einer Variante der Befestigung der Getriebeeinheit im Fahrradrahmen 209 weist ein mit dem Hohlradträger 208 radial und seitlich fest verbundener Verbindungsflansch 254 an seinem Umfang Bohrungen auf, die mit den Bohrungen des Fahrradrahmens 209 fluchten und durch die der Fahrradrahmen 209 mittels Schraubverbindungen 246 mit dem Hohlradträger 208 befestigt wird. Der dadurch erzielte axiale Versatz des Fahrradrahmens 209 in Richtung des Planetengetriebes hat im Vergleich zu den Ausführungsformen aus Fig. 1 und Fig. 8 den Vorteil, dass die Außenseite des Fahrradrahmens 209 von der Getriebeeinheit bis zum Tretlager in einer geraden zur Bezugsmittelebene des Fahrrades parallelen Linie verlaufen kann.

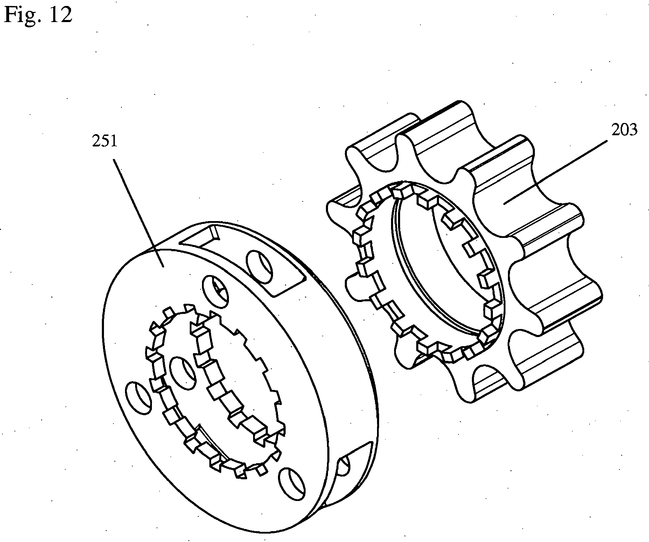

Zu f. Der Antreiber 203 ist in diesem Ausführungsbeispiel zum Antriebsrad 203c eines der Getriebeeinheit vorgeschalteten Zahnriementriebes ausgebildet. Außerdem sind der Antreiber 203 und der Planetenträger 251 zweiteilig ausgeführt. Die Welle-Nabe-Verbindung zwischen Antreiber 203 und Planetenträger 251 wird platzsparend durch eine Klauenkupplung verwirklicht. Fig. 12 zeigt ein Ausführungsbeispiel einer drehfesten Klauen-Kupplung zwischen dem Antreiber 203 und dem Planetenträger 251 in der Explosionsansicht.

Im Ergebnis sind mit den vorstehend beschriebenen besonderen Merkmalen der Erfindung, belegt durch die in den Fig. 1, Fig. 8 und Fig. 11 dargestellten Ausführungsformen, aufgrund des gekröpften Abtriebsrades 2 beziehungsweise aufgrund der freien Gestaltbarkeit des Hinterrades 40, 140 und damit nicht in der Bezugsmittelebene erforderlichen Befestigung des Hinterrades 40, 140 am Hinterradflansch 14, 114 beziehungsweise auf der Hinterradwelle 212 sowie aufgrund der besonders kompakten Form der Freilauf- und Schalteinrichtungen sehr geringe Kettenlinienabstände von je nach Hinterradbreite ca. 37 - 55 mm realisierbar. Im Falle eines 10 Zoll Vollkunststoff-Laufrades resultiert beispielsweise in etwa folgender Kettenlinienabstand (Fig. 11):

| | |
|---|---|
| Breite des Hinterrades geteilt durch zwei: | 34/2 = 17 mm |
| Mindestabstand des Hinterrades zum Fahrradrahmen: | + 4 mm |
| Breite des Fahrradrahmens auf Höhe des Hinterrades: | + 8 mm |
| Abstand der Kette zum Fahrradrahmen: | + 3 mm |
| Kettenbreite geteilt durch 2: | 10/2 = + 5 mm |
| Resultierender Kettenlinienabstand zur Bezugsmittelebene des Fahrrades | = 37 mm |

Im Falle eines 12- oder 14-Zoll-Luftreifen-Laufrades mit einer Zwei-Gang-Getriebeeinheit resultiert in etwa beispielsweise folgender Kettenlinienabstand (Fig. 1):

| | |
|---|---|
| Breite des Hinterradreifens geteilt durch zwei: | 40/2 = 20,0 mm |
| Mindestabstand des Hinterrades zum Fahrradrahmen: | + 6,0 mm |
| Breite des Fahrradrahmens: | + 8,0 mm |
| Materialstärke des Hohlradträger zw. Fahrradrahmen und Planetenträger: | + 2,0 mm |
| Breite des Planetenträgers: | 3 + 15 + 3,5 = + 20,5 mm |
| Materialstärke der Dichtkappe | 0,5 mm |
| Breite des Abtriebs-Zahnkranzes geteilt durch 2: | 2/2 = + 1,0 mm |
| Kettenlinienversatz durch gekröpften Abtriebs-Zahnkranz: | - 2,7 mm |
| Resultierender Kettenlinienabstand zur Bezugsmittelebene des Fahrrades | = 55,3 mm |

Die zur Aufnahme der nutzungsbedingt auftretenden Kräfte (Gewichtskräfte, Fahrbahnschläge) und Momente (Abstützmoment des Hohlrades) erforderliche Verbindung zwischen Hohlradträger (8, 108, 208) und Fahrradrahmen (9, 109, 209) kann für die in Fig. 1, Fig. 8 und Fig. 11 dargestellten Ausführungsformen wie gezeigt lösbar (zum Beispiel mittels Verschraubung) oder auch stoffschlüssig (durch Löten, Kleben, Schweißen oder einstückig) vorgesehen werden. Ausführungsformen mit stoffschlüssigen Verbindungen zwischen Fahrradrahmen (9, 109, 209) und Hohlradträger (8, 108, 208) beziehungsweise Hohlrad (7, 107, 207) sind ebenfalls von der Erfindung umfasst.

Weitere dem Fachmann ohne weiteres zugängliche, deshalb nicht weiter dargestellte Ausführungsformen der Erfindung bestehen beispielsweise in der Ausführung der Welle-Nabe-Verbindung zwischen Sonnenrad und Hinterradwelle für die Ein-Gang-Getriebeeinheit als Passfeder-Verbindung. Dies ermöglicht eine einfach herzustellende Hinterradwelle.

Ebenso können die Hinterradwelle und das Sonnenrad für die Ein-Gang-Getriebeeinheit aus einem Stück gefertigt sein, so dass die Hinterradwelle gleichzeitig auch als Sonnenrad fungiert. Für diesen Fall können insbesondere für den Einsatz besonders kleiner Laufräder niedrige Übersetzungen der Getriebeeinheit beispielsweise bis 1 : 5 erreicht werden.

Für beide zuletzt genannten Ausführungsformen der Hinterradwelle und des Sonnenrades kann die Freilaufkupplung zwischen Hinterradwelle und Hinterradnabe angeordnet werden. Ebenso kann die Freilaufkupplung zwischen dem Abtriebsrad (2, 102, 202) des der Getriebeeinheit vorgeschalteten Zugmittel- beziehungsweise Stirnradgetriebes und dem Antreiber (3, 103, 203) angeordnet werden, beispielsweise mittels einer insbesondere für BMX-Räder handelsüblichen Sperrklinken-Freilaufkupplung oder eines für Kettenschaltungen handelsüblichen Ritzelpaketes. Dem Vorteil einer kostengünstigen Herstellung steht jedoch der Nachteil gegenüber, dass der Planetenträger (3b, 103b, 251) und die Planetenräder (6, 106, 206) im Freilauf-Fall mitdrehen mit der Folge von Wirkungsgradverlusten. Alle diese Ausführungsformen sind von der Erfindung umfasst.

Mit den vorgenannten Ausführungsformen lassen sich die im Folgenden beispielhaft näher beschriebenen Übersetzungsverhältnisse verwirklichen. Dabei wird beispielhaft Bezug auf die Ausführung der Zahnräder mit dem Modul 0,8 gemäß der der Fig. 8 und der Fig. 11 genommen. Andere festigkeitsmäßig einsetzbare Zahrrad-Moduln sind ebenso von der Erfindung umfasst. Nachfolgend sind für die oben beschriebenen Ausführungsformen beispielhafte und bevorzugte Kombinationen von Kettenrädern, Abtriebs-Zahnkränzen und Zähnezahlen der Planetengetriebe dargestellt, die zu den bevorzugten Ausführungsbeispielen für die Getriebeeinheit als Sechs-Gang-Getriebe mit gleichmäßiger Gangabstufung gehören und/beziehungsweise die durch geeignete Wahl des Abtriebs-Zahnkranzes besonders einfach auf mehrere Laufradgrößen adaptierbar sind.

Da die resultierenden Übersetzungen sehr kleine Zahlen ergeben, ist die Darstellung der Übersetzungsverhältnisse in der Form eines vorangestellten Verhältnisses "1 :" gewählt worden. In der jeweiligen Zeile für die dargestellte Übersetzung der jeweiligen Gangstufe findet sich dann der Divisor des Übersetzungsverhältnisses von 1: . Eine Übersetzung von 0,125 wird beispielsweise dargestellt als = 1 : 8.

Bei Verwendung eines handelsüblichen Zweifach-Kettenrades mit 42 und 27 Zähnen wird mit der in Fig. 8 dargestellten Ausführungsform eine gleichmäßige Gangabstufung zwischen 13,1 % und 18,8 % sowie ein Übersetzungsbereich zwischen kleinstem und größtem Gang von etwa 210 % erreicht:

**Tabelle A: Sechs-Gang-Getriebe für 14-Zoll- und 12-Zoll-Rad**

| Gangstufe Kettentrieb | 1 | 2 | 3 | 4 | 5 | 6 |
|---|---|---|---|---|---|---|
| Zähnezahl Antriebs-Kettenrad | 27 | 27 | 27 | 42 | 42 | 42 |
| Zähnezahl Abtriebs-Zahnkranz | 25 | 22 | 19 | 25 | 22 | 19 |
| Übersetzung Kettentrieb = 1 : | 1,08 | 1,23 | 1,42 | 1,68 | 1,91 | 2,21 |
| Gangstufe Planetengetriebe | 1 | 1 | 1 | 1 | 1 | 1 |
| Zähnezahl Hohlrad | 61 | 61 | 61 | 61 | 61 | 61 |
| Zähnezahl Planetenrad | 16 | 16 | 16 | 16 | 16 | 16 |
| Zähnezahl Sonnenrad | 29 | 29 | 29 | 29 | 29 | 29 |
| Übersetzung Planetengetriebe = 1 : | 3,1 | 3,1. | 3,1 | 3,1 | 3,1 | 3,1 |
| Gangstufe Gesamtgetriebe | 1 | 2 | 3 | 4 | 5 | 6 |
| Gesamtübersetzung = 1 : | 3,4 | 3,8 | 4,4 | 5,2 | 5,9 | 6,9 |
| Stufenschritt | | 13,6% | 15,8% | 18,2% | 13,6% | 15,8% |
| Entfaltung 14 Zoll-Rad in m/Kurbel-U | 3,6 | 4,1 | 4,7 | 5,6 | 6,3 | 7,3 |
| | | | | | | |

| Gangstufe Kettentrieb | 1 | 2 | 3 | 4 | 5 | 6 |
|---|---|---|---|---|---|---|
| Zähnezahl Antriebs-Kettenrad | 27 | 27 | 27 | 42 | 42 | 42 |
| Zähnezahl Abtriebs-Zahnkranz | 22 | 19 | 16 | 22 | 19 | 16 |
| Übersetzung Kettentrieb = 1 : | 1,23 | 1,42 | 1,69 | 1,91 | 2,21 | 2,63 |
| Gangstufe Planetengetriebe | 1 | 1 | 1 | 1 | 1 | 1 |
| Zähnezahl Hohlrad | 61 | 61 | 61 | 61 | 61 | 61 |
| Zähnezahl Planetenrad | 16 | 16 | 16 | 16 | 16 | 16 |
| Zähnezahl Sonnenrad | 29 | 29 | 29 | 29 | 29 | 29 |
| Übersetzung Planetengetriebe = 1 : | 3,1 | 3,1 | 3,1 | 3,1 | 3,1 | 3,1 |
| Gangstufe Gesamtgetriebe | 1 | 2 | 3 | 4 | 5 | 6 |
| Gesamtübersetzung = 1 : | 3,8 | 4,4 | 5,2 | 5,9 | 6,9 | 8,1 |
| Stufenschritt | | 15,8% | 18,8% | 13,1% | 15,8% | 18,8% |
| Entfaltung 12 Zoll-Rad in m/Kurbel-U | 3,4 | 4,0 | 4,7 | 5,3 | 6,2 | 7,3 |

**Tabelle B: Sechs-Gang-Getriebe für 10-Zoll-Rad**

| Gangstufe Kettentrieb | 1 | 2 | 3 | 4 | 5 | 6 |
|---|---|---|---|---|---|---|
| Zähnezahl Antriebs-Kettenrad | 27 | 27 | 27 | 42 | 42 | 42 |
| Zähnezahl Abtriebs-Zahnkranz | 19 | 16 | 14 | 19 | 16 | 14 |
| Übersetzung Kettentrieb = 1 : | 1,42 | 1,69 | 1,93 | 2,21 | 2,63 | 3,00 |
| Gangstufe Planetengetriebe | 1 | 1 | 1 | 1 | 1 | 1 |
| Zähnezahl Hohlrad | 61 | 61 | 61 | 61 | 61 | 61 |
| Zähnezahl Planetenrad | 16 | 16 | 16 | 16 | 16 | 16 |
| Zähnezahl Sonnenrad | 29 | 29 | 29 | 29 | 29 | 29 |
| Übersetzung Planetengetriebe = 1 : | 3,1 | 3,1 | 3,1 | 3,1 | 3,1 | 3,1 |
| Gangstufe Gesamtgetriebe | 1 | 2 | 3 | 4 | 5 | 6 |
| Gesamtübersetzung = 1 : | 4,4 | 5,2 | 6,0 | 6,9 | 8,1 | 9,3 |
| Stufenschritt | | 18,8% | 14,3% | 14,6% | 18,8% | 14,3% |
| Entfaltung 10 Zoll-Rad in m/U | 3,5 | 4,2 | 4,8 | 5,5 | 6,5 | 7,4 |

Die in Fig. 11 dargestellte Eingang-Getriebeeinheit kann auf die Radgrößen 7 bis 16 Zoll so adaptiert werden, dass die gleiche nutzungsgerechte Entfaltung erreicht wird, indem einfach ein unterschiedlicher Abtriebs-Zahnkranz mit variierter Zähnezahl verwendet wird:

**Tabelle C: Identische Eingang-Getriebeeinheit für Laufradgrößen von 7 Zoll bis 16 Zoll**

| Gangstufe Kettentrieb | 1 | 1 | 1 | 1 | 1 | 1 |
|---|---|---|---|---|---|---|
| Zähnezahl Antriebs-Kettenrad | 38 | 38 | 38 | 38 | 38 | 38 |
| Zähnezahl Abtriebs-Zahnkranz | 13 | 15 | 18 | 20 | 24 | 28 |
| Übersetzung Kettentrieb = 1 : | 2,92 | 2,53 | 2,11 | 1,9 | 1,58 | 1,36 |
| Gangstufe Planetengetriebe | 1 | 1 | 1 | 1 | 1 | 1 |
| Zähnezahl Hohlrad | 57 | 57 | 57 | 57 | 57 | 57 |
| Zähnezahl Planetenrad | 15 | 15 | 15 | 15 | 15 | 15 |
| Zähnezahl Sonnenrad | 27 | 27 | 27 | 27 | 27 | 27 |
| Übersetzung Planetengetriebe = 1 : | 3,11 | 3,11 | 3,11 | 3,11 | 3,11 | 3,11 |
| Gesamtübersetzung = 1 : | 9,1 | 7,9 | 6,6 | 5,9 | 4,9 | 4,2 |
| Radgröße in Zoll | 7 | 8 | 10 | 12 | 14 | 16 |
| Entfaltung in m/Kurbel-U | 5,3 | 5,2 | 5,3 | 5,3 | 5,3 | 5,2 |

Neben den dargestellten Ausführungsformen sind mit den zuvor beschriebenen besonderen Merkmalen der Erfindung eine Vielzahl weiterer Übersetzungsverhältnisse realisierbar, die alle von der Erfindung umfasst sind.

Beispielsweise kann in einer Ausführungsform, in der die Hinterradwelle und das Sonnenrad aus einem Stück bestehen, das Sonnenrad nochmals kleinere Zähnezahlen aufweisen, womit die Getriebeeinheit für kleinste Laufradgrößen einsetzbar wird. Nachfolgend ist beispielhaft eine mögliche Ausführung und die mittels Variation des Abtriebs-Zahnkranzes mögliche Adaptierung auf Laufradgrößen von 6 bis 14 Zoll dargestellt.

**Tabelle D: Identische Eingang-Getriebeeinheit für Laufradgrößen von 6 Zoll bis 14 Zoll**

| Gangstufe Kettentrieb | 1 | 1 | 1 | 1 | 1 |
|---|---|---|---|---|---|
| Zähnezahl Antriebs-Kettenrad | 32 | 32 | 32 | 32 | 32 |
| Zähnezahl Abtriebs-Zahnkranz | 13 | 17 | 21 | 24 | 28 |
| Übersetzung Kettentrieb = 1 : | 2,46 | 1,88 | 1,52 | 1,33 | 1,14 |
| Gangstufe Planetengetriebe | 1 | 1 | 1 | 1 | 1 |
| Zähnezahl Hohlrad | 60 | 60 | 60 | 60 | 60 |
| Zähnezahl Planetenrad | 21 | 21 | 21 | 21 | 21 |
| Zähnezahl Sonnenrad | 18 | 18 | 18 | 18 | 18 |
| Übersetzung Planetengetriebe = 1 : | 4,33 | 4,33 | 4,33 | 4,33 | 4,33 |
| Gesamtübersetzung = 1 : | 10,7 | 8,2 | 6,6 | 5,8 | 5,0 |
| Radgröße in Zoll | 6 | 8 | 10 | 12 | 14 |
| Entfaltung in m/Kurbel-U | 5,3 | 5,4 | 5,3 | 5,2 | 5,3 |

Insgesamt sind durch entsprechende Wahl der Zähnezahlen des Planetengetriebes Übersetzungen des Planetengetriebes von ca. 1 : 4,5 bis 1 : 5,0 und weniger erreichbar.

### Bezugszeichenliste

- 1: Kette des Kettentriebes
- 201: Riemen des Riementriebes
- 2, 102, 203c: Abtriebsräder des Zugmittel- oder Stirnradgetriebes
- 3, 103, 203: Antreiber
- 3b, 103b, 251: Planetenträger
- 4, 104: Sicherungsringe Abtriebsrad
- 5, 105, 205: Planetenachsen
- 6a, 6b, 106, 206: Planetenräder
- 7, 107, 207: Hohlrad
- 8, 108, 208: Hohlradträger
- 9, 109, 209: Fahrradrahmen
- 10: Sonnenrad
- 11, 111,211: Sonnenrad
- 12, 112, 212: Hinterradwelle
- 13, 113: Antriebswelle der Hinterradwelle
- 14, 114: Hinterradflansch der Hinterradwelle
- 15, 115, 215: Kupplungsglied
- 16, 116, 216: Druckplatten der Freilaufkupplungen
- 17, 117, 217: Lager für Antreiber
- 18, 118, 218: Lager für Antreiber
- 19, 119, 219: Befestigungsschraube für Lager Antreiber
- 20, 120, 220: Sicherungsringe für Lager Antreiber
- 21, 22: Distanzscheiben für Sonnenräder
- 121, 221: Sicherungsringe für Sonnenräder
- 23, 24, 124, 223: Druckfedern für die Schalt- und Kupplungseinrichtungen
- 25, 26, 27, 28, 125, 127, 128, 225, 226: Führungsbuchsen /-scheiben für Druckfeder, Druckplatte/-stück
- 29: Schaltschrauben der Schalteinrichtungen
- 30: Schaltmuttern der Schalteinrichtungen
- 31: Schaltkettchen
- 32: Nadellager für Schaltkettchen
- 33: Führungsbuchse für Schaltkettchen
- 34: Lager für Schaltkettchen
- 35, 135, 235: Lager für Hinterradwellen
- 36, 136, 236: Sicherungsringe für Lager Hinterradwelle - Hohlradträger
- 37, 137, 237: Anlegescheiben für Lager Hinterradwelle Sicherungsring für Lager Hinterradwelle
- 38, 138: Kontermutter
- 238: Konterschraube
- 39, 139: Befestigungsschrauben für Hinterrad
- 239: Gewindehülse für die Befestigung des Hinterrrades
- 339: Befestigungsmutter für die Befestigung des Hinterrades
- 40, 140, 240: Hinterrad
- 41: Dichtungs-Stopfen
- 42, 43: Dichtungsringe
- 44, 144, 244: Dichtkappen für das Planetengetriebe
- 45: Anlegekappe für die O-Ring-Dichtung
- 46, 146, 246: Befestigungsschrauben für Getriebeeinheit - Fahrradrahmen
- 147, 247: Scheibe für die radiale Positionierung der Druckplatte
- 148: Lagerbuchse für Lager Antreiber
- 149, 249, 252: Unterlegscheiben für Befestigüngs- und Konterschrauben
- 253: Führungsrohr in der Hinterradwelle
- 254: Verbindungsflansch für Fahrradrahmen - Hohlradträger

## Patentansprüche

1. Getriebeeinheit mit Planetengetriebe,
wahlweise für Fahrräder oder für Anhängefahrräder,
enthaltend:
a. ein Planetengetriebe, wobei das Planetengetriebe ein direkt oder mittelbar drehfest mit einem Fahrradrahmen (9, 109, 209) verbundenes Hohlrad (7, 107, 207), einen Planetenträger (3b, 103b, 251) mit Planetenrädem (6a, 6b, 106, 206) und mindestens ein mit den Planetenrädern (6a, 6b, 106, 206) im Eingriff befindliches Sonnenrad (10, 11, 111, 211) aufweist,
b. eine zum Sonnenrad (10, 11, 111, 211) koaxiale Hinterradwelle (12, 112, 212),
c. einen mit dem Planetenträger (3b, 103b, 251) drehfest wirkverbundenen Antreiber (3, 103,203),
d. mindestens ein die Hinterradwelle (12, 112, 212) zum Fahrradrahmen (9, 109, 209) lagerndes Lager (35, 135, 235),
zur Bereitstellung mindestens eines Übersetzungsverhältnisses zwischen dem Antreiber (3, 103, 203) und der Hinterradwelle (12, 112, 212),
**dadurch gekennzeichnet, dass** das Lager (35, 135, 235) axial gesehen zwischen dem Planetengetriebe und dem Sitz eines Hinterrades (40, 140, 240) angeordnet ist und radial gesehen innen die Hinterradwelle (12, 112, 212) lagert und radial gesehen außen - direkt oder mittelbar - mit dem Fahrradrahmen (9, 109, 209) verbunden ist.

2. Getriebeeinheit nach Anspruch 1, **dadurch gekennzeichnet, dass** das Planetengetriebe und der Sitz des Hinterrades (40, 140, 240) auf der Hinterradwelle (12, 112, 212) auf verschiedenen Seiten des Fahrradrahmens (9, 109, 209) angeordnet sind.

3. Getriebeeinheit nach Anspruch 1 oder 2, **dadurch gekennzeichnet, dass** ein Abtriebsrad (2, 102, 203c) eines der Getriebeeinheit vorgeschalteten Zugmittelgetriebes und das Planetengetriebe auf derselben Seite des Fahrradrahmens (9, 109, 209) angeordnet sind wie ein von einem Fahrradfahrer angetriebenes Antriebsrad des Zugmittelgetriebes.

4. Getriebeeinheit nach Anspruch 1 oder 2, **dadurch gekennzeichnet, dass** ein Abtriebsrad eines der Getriebeeinheit vorgeschalteten Stirnradgetriebes und das Planetengetriebe auf derselben Seite des Fahrradrahmens angeordnet sind wie ein von einem Fahrradfahrer angetriebenes Antriebsrad des Stirnradgetriebes.

5. Getriebeeinheit nach einem der Ansprüche 1 bis 4, **dadurch gekennzeichnet, dass** die Getriebeeinheit ein mit der Hinterradwelle (12, 112, 212) drehfest wirkverbundenes Kupplungsglied (15, 115, 215) aufweist, das im Kraftfluss zwischen Sonnenrad (10, 11, 111, 211) und Hinterradwelle (12, 112, 212) angeordnet ist.

6. Getriebeeinheit nach Anspruch 5, **dadurch gekennzeichnet, dass** das Kupplungsglied (15, 115, 215) axial verschieblich ist.

7. Getriebeeinheit nach Anspruch 6, **dadurch gekennzeichnet, dass** ein die Hinterradwelle (12, 112, 212) rechtwinklig zu deren Längsachse durchdringendes, in einer entsprechenden Ausnehmung der Hinterradwelle (12, 112, 212) angeordnetes Druckstück (16, 116, 216) das Kupplungsglied (15, 115, 215) radial gesehen außerhalb und zu beiden Seiten der Hinterradwelle (12, 112, 212) zum Sonnenrad (10, 11, 111, 211) verschiebt.

8. Getriebeeinheit nach Anspruch 7, **dadurch gekennzeichnet, dass** eine innerhalb eines hohlzylindrischen Teils der Hinterradwelle (12, 112, 212) angeordnete Druckfeder (23, 24, 124, 223) das Druckstück (16, 116, 216) und damit das Kupplungsglied (15, 115, 215) zum Sonnenrad (10, 11, 111, 211) verschiebt.

9. Getriebeeinheit nach Anspruch 8, **dadurch gekennzeichnet, dass** innerhalb des hohlzylindrischen Teils der Hinterradwelle (112) eine Druckhülse (125) mit zwei an beiden Seiten des Druckstückes (116) verlaufenden Schenkeln angeordnet ist, die sich axial gesehen in der Hinterradwelle (112) zum Hinterrad (140) hin abstützt und die die Druckfeder (124) auf Distanz zur zum Sonnenrad (111) gewandten Seite des Druckstückes (116) hält, wobei die Druckfeder (124) eine innerhalb der Hinterradwelle (112) angeordnete Führungsbuchse (128) axial verschiebt, die zur Führung des Druckstückes (116) Ausnehmungen aufweist und das Druckstück (116) gegen das Kupplungsglied (115) drückt und dieses zum Sonnenrad (111) verschiebt.

10. Getriebeeinheit nach einem der Ansprüche 7 bis 9, **dadurch gekennzeichnet, dass** das Planetengetriebe ein feststehendes Hohlrad (7), einen Planetenträger (3b), jeweils zwei fest miteinander verbundene Planetenräder (6a, 6b) verschiedener Zähnezahl und zwei mit den Planetenrädern (6a, 6b) im Eingriff stehende zur Hinterradwelle (12) koaxiale Sonnenräder (10, 11) aufweist, wobei das zum Fahrradrahmen (9) hin angeordnete Planetenrad (6a) mit dem Hohlrad (7) im Eingriff steht und den Sonnenrädern (10, 11) ein Kupplungsglied (15) nachgeschaltet ist, dessen Schaltstellung bestimmt, welches der beiden Sonnenräder (10, 11) die Hinterradwelle (12) antreibt, wodurch die Getriebeeinheit zwei schaltbare Gangstufen aufweist.

11. Getriebeeinheit nach Anspruch 10, **dadurch gekennzeichnet, dass** das Kupplungsglied (15) radial gesehen innerhalb der Sonnenräder (10, 11) angeordnet ist.

12. Getriebeeinheit nach Anspruch 10 oder 11, **dadurch gekennzeichnet, dass** innerhalb des hohlzylindrischen Teils der Hinterradwelle (12) auf der zum Hinterrad (40) gewandten Seite des Druckstückes (16) eine schwächere Druckfeder (23) und auf der zum Antreiber (3) gewandten Seite des Druckstückes (16) eine stärkere Druckfeder (24), die auf ihrer zum Druckstück (16) gewandten Seite eine Führungsbuchse (27) gegen das Druckstück (16) drückt, angeordnet ist, wodurch eine Zwei-Gang-Schaltung verwirklicht wird mit einer ersten Gangstufe, die geschaltet wird, indem die stärkere Druckfeder (24) die Druckkraft der schwächeren Druckfeder (23) auf das Druckstück (16) überwindet und das Kupplungsglied (15) gegen das zum Hinterrad (40) angeordnete Sonnenrad (10) drückt, und mit einer zweiten Gangstufe, die geschaltet wird, indem ein aus der Hinterradwelle (12) hinaus führendes Schaltkettchen (31) die Führungsbuchse (27) und die stärkere Druckfeder (24) von dem Druckstück (16) wegzieht und die schwächere Druckfeder (23) das Druckstück (16) und das Kupplungsglied (15) gegen das zum Antreiber (3) angeordnete Sonnenrad (11) drückt.

13. Getriebeeinheit nach Anspruch 12, **dadurch gekennzeichnet, dass** die Führungsbuchse (27) eine zentrisch in der Führungsbuchse (27) angeordnete und durch eine Bohrung der Führungsbuchse (27) geführte Schaltschraube (29) aufweist, die mit dem Schaltkettchen (31) direkt oder mittelbar verbunden ist und von dem Druckstück (16) weggezogen werden kann, womit die Druckkraft der stärkeren Druckfeder (24) auf das Druckstück (16) aufgehoben werden kann.

14. Getriebeeinheit nach einem der Ansprüche 5 bis 12, **dadurch gekennzeichnet, dass** das Kupplungsglied (15, 115, 215) und/oder das Sonnenrad (10, 11, 111, 211) Abschrägungen (15b, 11d) aufweist, die das Kupplungsglied (15, 115, 215) aus den Ausnehmungen (11a, 111a) des Sonnenrades (10, 11, 111, 211) heraus drücken, wenn die Hinterradwelle (12, 112, 212) schneller dreht als das jeweilige Sonnenrad (10, 11, 111, 211).

15. Getriebeeinheit nach Anspruch 14, **dadurch gekennzeichnet, dass** im Kraftfluss zwischen Sonnenrad (10, 11, 111, 211) und Hinterradwelle (12, 112, 212) eine Freilaufkupplung angeordnet ist, wobei durch die Abschrägungen (15b, 11d) des Kupplungsgliedes (15, 115, 215) und/oder der Sonnenräder (10, 11, 111, 211) die Stirnzähne (15a, 115a, 215a) des Kupplungsgliedes (15, 115, 215) aus den Ausnehmungen (11a, 111a, 211a) des Sonnenrades (10, 11, 111, 211) gedrückt werden, wenn die Hinterradwelle (12, 112, 212) schneller dreht als das jeweilige Sonnenrad (10, 11, 111,211) und wobei das Kupplungsglied (15, 115, 215) durch die Druckfedern (23, 24; 124, 223) axial gegen das Sonnenrad (10, 11, 111,211) gedrückt wird, so dass der zur Drehmomentübertragung erforderliche formschlüssige Eingriff der Stirnzähne (15a, 115a, 215a) des Kupplungsgliedes (15, 115, 215) in die Ausnehmungen (11a, 111a, 211a) des jeweiligen Sonnenrades (10, 11, 111,211) dann erfolgt, wenn das angetriebene Sonnenrad (10, 11, 111, 211) die Hinterradwelle (12, 112, 212) überholt.

16. Getriebeeinheit nach einem der Ansprüche 5 bis 15, **dadurch gekennzeichnet, dass** die Hinterradwelle (12, 112) zweiteilig ausgeführt ist, bestehend aus einem ersten Wellenteil (13, 113), auf dem das Kupplungsglied (15, 115) angeordnet ist und auf dem der Antreiber (3, 103) gelagert ist, und einem zweiten, mit dem ersten koaxial verbundenen Wellenteil (14, 114), auf dem das Hinterrad (40, 140) sitzt und der von dem Lager (35, 135) im Fahrradrahmen (9, 109) gelagert ist.

17. Getriebeeinheit nach einem der Ansprüche 1 bis 4, **dadurch gekennzeichnet, dass** die Hinterradwelle und das Sonnenrad aus einem einstückig hergestellten Bauteil bestehen.

## Claims

1. Transmission unit with a planetary gearing system, optionally for bicycles or for trailer bicycles, containing:
a. a planetary gearing system, the planetary gearing system with a ring gear (7, 107, 207, 307), which is directly or indirectly co-rotatingly connected to a bicycle frame (9, 109, 209, 366), a planet carrier (3b, 103b, 251, 303b) with planet gears (6a, 6b, 106, 206, 306a, 306b), and at least one sun gear (10, 11, 111, 211, 310, 311) which is engaged with the planet gears (6a, 6b, 106, 206, 306a),
b. a rear wheel shaft (12, 112, 212, 312) which is coaxial with respect to the sun gear (10, 11, 111, 211, 310, 311),
c. a driving mechanism (3, 103, 203, 303) which is operatively rotationally engaged with the planet carrier (3b, 103b, 251, 303b),
d. at least one bearing (35, 135, 235, 335) which bears the rear wheel shaft (12, 112, 212, 312) with respect to the bicycle frame (9, 109, 209, 366),
for providing at least one transmission ratio between the driving mechanism (3, 103, 203, 303) and the rear wheel shaft (12, 112, 212, 312),
**characterised in that** the bearing (35, 135, 235, 335) is arranged between the planetary gearing system and the seat of a rear wheel (40, 140, 240, 340) from an axial perspective, and is borne inside the rear wheel shaft (12, 112, 212, 312) from a radial perspective and connected to the bicycle frame (9, 109, 209, 366), directly or indirectly, externally from a radial perspective.

2. Transmission unit according to claim 1, **characterised in that** the planetary gearing system and the seat of the rear wheel (40, 140, 240) on the rear wheel shaft (12, 112, 212) are arranged on different sides of the bicycle frame (9, 109, 209).

3. Transmission unit according to either claim 1 or claim 2, **characterised in that** a driven wheel (2, 102, 203c, 302) of a traction mechanism transmission upstream from the transmission unit and the planetary gearing system are arranged on the same side of the bicycle frame (9, 109, 209, 366) as a drive wheel, which is driven by a cyclist, of the traction mechanism transmission.

4. Transmission unit according to either claim 1 or claim 2, **characterised in that** a driven wheel of a spur gear transmission upstream from the transmission unit and the planetary gearing system are arranged on the same side of the bicycle frame as a drive wheel, which is driven by a cyclist, of the spur gear transmission.

5. Transmission unit according to any one of claims 1 to 4, **characterised in that** the transmission unit has a clutch member (15, 115, 215), which is operatively rotationally engaged with the rear wheel shaft (12, 112, 212) and which is arranged between the sun gear (10, 11, 111, 211) and the rear wheel shaft (12, 112, 212) in the power train.

6. Transmission unit according to claim 5, **characterised in that** the clutch member (15, 115, 215) is axially displaceable.

7. Transmission unit according to claim 6, **characterised in that** a compression piece (16, 116, 216), which penetrates the rear wheel shaft (12, 112, 212) perpendicular to the longitudinal axis thereof and is arranged in a corresponding recess in the rear wheel shaft (12, 112, 212), displaces the clutch member (15, 115, 215), seen from a radial perspective outside and on both sides of the rear wheel shaft (12, 112, 212), with respect to the sun gear (10, 11, 111,211).

8. Transmission unit according to claim 7, **characterised in that** a compression spring (23, 24, 124, 223), which is arranged inside a hollow cylindrical part of the rear wheel shaft (12, 112, 212), displaces the compression piece (16, 116, 216) and thus the clutch member (15, 115, 215) with respect to the sun gear (10, 11, 111, 211).

9. Transmission unit according to claim 8, **characterised in that** a compression sleeve (125) with two limbs extending on the two sides of the compression piece (116) is arranged inside the hollow cylindrical part of the rear wheel shaft (112), and is braced in the rear wheel shaft (112) towards the rear wheel in an axial perspective and holds the compression spring (124) at a distance from the face of the compression piece (116) facing the sun gear (111), the compression spring (124) axially displacing a guide bushing (128), which is arranged inside the rear wheel shaft (112), has recesses for guiding the compression piece (116) and displaces the compression piece (116) against the clutch member (115) and said member with respect to the sun gear (111).

10. Transmission unit according to any one of claims 7 to 9, **characterised in that** the planetary gearing system has a stationary ring gear (7), a planet carrier (3b), in each case two rigidly interconnected planet gears (6a, 6b) having different numbers of teeth, and two sun gears (10, 11) which are coaxial with the rear wheel shaft (12) and engaged with the planet gears (6a, 6b), the planet gear (6a) arranged towards the bicycle frame engaging with the ring gear (7), and a clutch member (15), the shifting setting of which determines which of the two sun gears (10, 11) drives the rear wheel shaft (12), meaning that the transmission unit has two settable gear ratios, being downstream from the sun gears (10, 11).

11. Transmission unit according to claim 10, **characterised in that** the clutch member (15) is arranged inside the sun gear (10, 11) from a radial perspective.

12. Transmission unit according to either claim10 or claim 11, **characterised in that** a weaker compression spring (23) is arranged inside the hollow cylindrical part of the rear wheel shaft (12) on the face of the compression piece (16) facing the rear wheel (40), and a stronger compression spring (24) is arranged on the face of the compression piece (16) facing the driving mechanism (3) and, on the face thereof facing the compression piece (16), presses a guide bushing (27) against the compression piece (16), thus implementing a two-gear shifter with a first gear ratio, which is set **in that** the stronger compression spring (24) overcomes the compressive force of the weaker compression spring (23) on the compression piece (16) and presses the clutch member (15) against the sun gear (10) arranged with respect to the rear wheel (40), and with a second gear ratio, which is set **in that** a shifting chain (31) leading out of the rear wheel shaft (12) pulls the guide bushing (27) and the stronger compression spring (24) away from the compression piece (16) and the weaker compression spring (23) pushes the compression piece (16) and the clutch member (15) against the sun gear (11) arranged with respect to the driving mechanism (3).

13. Transmission unit according to claim 12, **characterised in that** the guide bushing (27) has a shifting screw (29), which is arranged centrally in the guide bushing (27) and passed through a hole in the guide bushing (27) and which is directly or indirectly connected to the shifting chain (31) and can be pulled away from the compression piece (16), meaning that the compressive force of the stronger compression spring (24) on the compression piece (16) can be removed.

14. Transmission unit according to any one of claims 5 to 12, **characterised in that** the clutch member (15, 115, 215) and/or the sun gear (10, 11, 111,211) comprises bevels (15b, 11d) which press the clutch member (15, 115, 215) out of the recesses (11a, 111a) of the sun gear (10, 11, 111, 211) when the rear wheel shaft (12, 112, 212) rotates faster than the respective sun gear (10, 11, 111,211)

15. Transmission unit according to claim 14, **characterised in that** a freewheel clutch is arranged between the sun gear (10, 11, 111, 211) and the rear wheel shaft (12, 112, 212) in the power train, the bevels (15b, 11d) of the clutch member (15, 115, 215) and/or of the sun gears (10, 11, 111, 211) pushing the radial teeth (15a, 115a, 215a) of the clutch member (15, 115, 215) out of the recesses (11a, 111a, 211 a) of the sun gear (10, 11, 111, 211) when the rear wheel shaft (12, 112, 212) rotates faster than the respective sun gear (10, 11, 111,211), and the clutch member (15, 115, 215) being pushed axially against the sun gear (10, 11, 111, 211) by the compression springs (23, 24; 124, 223), in such a way that the positive engagement, which is required for the torque transmission, of the radial teeth (15a, 115a, 215a) of the clutch member (15, 115, 215) in the recesses (11a, 11a, 211a) of the respective sun gear (10, 11, 111,211) takes place when the driven sun gear (10, 11, 111, 211) overtakes the rear wheel shaft (12, 112, 212).

16. Transmission unit according to any one of claims 5 to 15, **characterised in that** the rear wheel shaft (12, 112) is formed in two parts, consisting of a first shaft part (13, 113), on which the clutch member (15, 115) is arranged and on which the driving mechanism (3, 103) is borne, and a second shaft part (14, 114), which is coaxially connected to the first and on which the rear wheel (40, 140) is placed and which is borne by the bearing (35, 135) in the bicycle frame (9, 109).

17. Transmission unit according to any one of claims 1 to 4, **characterised in that** the rear wheel shaft and the sun gear consist of a component produced in a single piece.

## Revendications

1. Unité de transmission à engrenage planétaire,
sélectivement pour des bicyclettes ou des vélos-suiveurs,
comprenant :
a. un engrenage planétaire, l'engrenage planétaire présentant une couronne (7, 107, 207) reliée directement ou indirectement solidaire en rotation avec un cadre de bicyclette (9, 109, 209), un train planétaire (3b, 103b, 251) avec des roues planétaires (6a, 6b, 106, 206) et au moins une roue solaire (10, 11, 111, 211) se trouvant en prise avec les roues planétaires (6a, 6b, 106, 206),
b. un arbre de roue arrière (12, 112, 212) coaxial par rapport à la roue solaire (10, 11, 111, 211),
c. un élément d'entraînement (3, 103, 203) relié de manière opérationnelle solidaire en rotation avec le train planétaire (3b, 103b, 251),
d. au moins un palier (35, 135, 235) logeant l'arbre de roue arrière (12, 112, 212) sur le cadre de bicyclette (9, 109, 209),
pour fournir au moins un rapport de transmission entre l'élément d'entraînement (3, 103, 203) et l'arbre de roue arrière (12, 112, 212),
**caractérisée en ce que** le palier (35, 135, 235), qui est disposé, en vue axiale, entre l'engrenage planétaire et le logement d'une roue arrière (40, 140, 240) et loge à l'intérieur, en vue radiale, l'arbre de roue arrière (12, 112, 212) et est relié à l'extérieur, en vue radiale, - directement ou indirectement - au cadre de bicyclette (9, 109, 209).

2. Unité de transmission selon la revendication 1, **caractérisée en ce que** l'engrenage planétaire et le logement de la roue arrière (40, 140, 240) sur l'arbre de roue arrière (12, 112, 212) sont disposés sur différents côtés du cadre de bicyclette (9, 109, 209).

3. Unité de transmission selon la revendication 1 ou 2, **caractérisée en ce qu'**une roue de sortie (2, 102, 203c) d'un mécanisme de traction prévu en amont de l'unité de transmission et l'engrenage planétaire sont disposés sur le même côté du cadre de bicyclette (9, 109, 209) qu'une roue d'entraînement du mécanisme de traction entrainée par un cycliste.

4. Unité de transmission selon la revendication 1 ou 2, **caractérisée en ce qu'**une roue de sortie d'un engrenage droit prévu en amont de l'unité de transmission et l'engrenage planétaire sont disposés sur le même côté du cadre de bicyclette qu'une roue d'entraînement de l'engrenage droit entrainée par un cycliste.

5. Unité de transmission selon l'une des revendications 1 à 4, **caractérisée en ce que** l'unité de transmission présente un organe d'accouplement (15, 115, 215) de manière opérationnelle solidaire en rotation avec l'arbre de roue arrière (12, 112, 212), qui est disposé dans le flux de force entre la roue solaire (10, 11, 111, 211) et l'arbre de roue arrière (12, 112, 212).

6. Unité de transmission selon la revendication 5, **caractérisée en ce que** l'organe d'accouplement (15, 115, 215) peut coulisser axialement.

7. Unité de transmission selon la revendication 6, **caractérisée en ce qu'**une pièce de pression (16, 116, 216) pénétrant dans l'arbre de roue arrière (12, 112, 212) perpendiculairement à son axe longitudinal, disposée dans un évidement correspondant de l'arbre de la roue arrière (12, 112, 212), fait coulisser l'organe d'accouplement (15, 115, 215), en vue radiale, hors de et sur les deux côtés de l'arbre de roue arrière (12, 112, 212) vers la roue solaire (10, 11, 111,211).

8. Unité de transmission selon la revendication 7, **caractérisée en ce qu'**un ressort de pression (23, 24, 124, 223) disposé à l'intérieur de la pièce cylindrique creuse de l'arbre de roue arrière (12, 112, 212) fait coulisser la pièce de pression (16, 116, 216) et ainsi l'organe d'accouplement (15, 115, 215) vers la roue solaire (10, 11, 111,211).

9. Unité de transmission selon la revendication 8, **caractérisée en ce qu'**un manchon de pression (125) avec deux branches s'étendant sur les deux faces de la pièce de pression (116) est disposé à l'intérieur de la pièce cylindrique creuse de l'arbre de roue arrière (112), qui s'appuie, en vue axiale, dans l'arbre de roue arrière (112) vers la roue arrière (140) et qui maintient le ressort de pression (124) à distance du côté faisant face à la roue solaire (111) de la pièce de pression (116), le ressort de pression (124) faisant coulisser de manière axiale une douille de guidage (128) disposée à l'intérieur de l'arbre de roue arrière (112), qui présente des évidements pour le guidage de la pièce de pression (116) et pousse la pièce de pression (116) contre l'organe d'accouplement (115) et fait coulisser ce dernier vers la roue solaire (111).

10. Unité de transmission selon l'une des revendications 7 à 9, **caractérisée en ce que** l'engrenage planétaire présente une couronne (7) solidaire, un train planétaire (3b), respectivement deux roues planétaires (6a, 6b) reliées solidaires entre elles ayant différents nombres de dents et deux roues solaires (10, 11) coaxiales à l'arbre de roue arrière (12) se trouvant en prise avec les roues planétaires (6a, 6b), la roue planétaire (6a) disposée vers le cadre de bicyclette (9) se trouvant en prise avec la couronne (7) et un organe d'accouplement (15) étant prévu en aval des roues solaires (10, 11), dont la position de commutation détermine laquelle des deux roues solaires (10, 11) entraîne l'arbre de roue arrière (12), moyennant quoi l'unité de transmission présente deux rapports de transmission commutables.

11. Unité de transmission selon la revendication 10, **caractérisée en ce que** l'organe d'accouplement (15) est disposé, en vue radiale, à l'intérieur des roues solaires (10, 11).

12. Unité de transmission selon la revendication 10 ou 11, **caractérisée en ce que**, à l'intérieur de la pièce cylindrique creuse de l'arbre de roue arrière (12), un ressort de pression plus faible (23) est disposé sur le côté faisant face à la roue arrière (40) de la pièce de pression (16) et un ressort de pression plus fort (24) est disposé sur le côté faisant face à l'élément d'entraînement (3) de la pièce de pression (16), qui pousse une douille de guidage (27) contre la pièce de pression (16) sur son côté faisant face à la pièce de pression (16), moyennant quoi une commutation à deux rapports est réalisée avec un premier rapport de transmission qui est enclenché lorsque la force du ressort de pression plus fort (24) dépasse celle du ressort de pression plus faible (23) sur la pièce de pression (16) et pousse l'organe d'accouplement (15) contre la roue solaire (10) disposée sur la roue arrière (40), et avec un second rapport de transmission qui est enclenché lorsqu'une chaînette d'enclenchement (31) sortant de l'arbre de roue arrière (12) retire la douille de guidage (27) et le ressort de pression plus fort (24) de l'élément de pression (16) et la force de pression du ressort de pression plus faible (23) pousse la pièce de pression (16) et l'organe d'accouplement (15) contre la roue solaire (11) disposée sur l'élément d'entraînement (3).

13. Unité de transmission selon la revendication 12, **caractérisée en ce que** la douille de guidage (27) présente une vis d'avancement (29) disposée au centre dans la douille de guidage (27) et insérée à travers un perçage de la douille de guidage (27), qui est reliée directement ou indirectement à la chaînette d'enclenchement (31) et peut être retirée de la pièce de pression (16), la force de pression du ressort de pression plus fort (24) sur la pièce de pression (16) pouvant ainsi être relâchée.

14. Unité de transmission selon l'une des revendications 5 à 12, **caractérisée en ce que** l'organe d'accouplement (15, 115, 215) et/ou la roue solaire (10, 11, 111,211) présente des chanfreins (15b, 11d), qui délogent l'organe d'accouplement (15, 115, 215) des évidements (11a, 111a) de la roue solaire (10, 11, 111, 211) lorsque l'arbre de roue arrière (12, 112, 212) tourne plus vite que la roue solaire (10, 11, 111, 211) respective.

15. Unité de transmission selon la revendication 14, **caractérisée en ce qu'**un accouplement à roue libre est disposé dans le flux de force entre la roue solaire (10, 11, 111, 211) et l'arbre de roue arrière (12, 112, 212), les dents frontales (15a, 115a, 215a) de l'organe d'accouplement (15, 115, 215) étant délogées des évidements (11a, 111a, 211a) de la roue solaire (10, 11, 111, 211) par les chanfreins (15b, 11d) de l'organe d'accouplement (15, 115, 215) et/ou des roues solaires (10, 11, 111, 211) lorsque l'arbre de roue arrière (12, 112, 212) tourne plus vite que la roue solaire (10, 11, 111,211) respective et l'organe d'accouplement (15, 115, 215) étant poussé par les ressorts de pression (23, 24; 124, 223) de façon axiale contre la roue solaire (10, 11, 111, 211) de telle manière que l'engagement par complémentarité de forme nécessaire à la transmission de couple des dents frontales (15a, 115a, 215a) de l'organe d'accouplement (15, 115, 215) s'effectue alors dans les évidements (11a, 111a, 211a) de la roue solaire (10, 11, 111, 211) respective, lorsque la roue solaire (10, 11, 111, 211) entraînée dépasse l'arbre de roue arrière (12, 112, 212).

16. Unité de transmission selon l'une des revendications 5 à 15, **caractérisée en ce que** l'arbre de roue arrière (12, 112) est réalisé en deux parties, constitué d'un premier élément d'arbre (13, 113), sur lequel l'organe d'accouplement (15, 115) est disposé et sur lequel l'élément d'entraînement (3, 103) est monté, et d'un second élément d'arbre (14, 114) relié de manière coaxiale au premier élément d'arbre sur lequel est placée la roue arrière (40, 140) et qui est monté sur le palier (35, 135) dans le cadre de bicyclette (9, 109).

17. Unité de transmission selon l'une des revendications 1 à 4, **caractérisée en ce que** l'arbre de roue arrière et la roue solaire sont constituésd'une pièce réalisée d'un seul tenant.
